(19) Europäisches Patentamt
European Patent Office
Office européen des brevets

(11) **EP 4 345 723 A1**

(12) **EUROPÄISCHE PATENTANMELDUNG**

(43) Veröffentlichungstag:
**03.04.2024 Patentblatt 2024/14**

(21) Anmeldenummer: 23201003.3

(22) Anmeldetag: **29.09.2023**

(51) Internationale Patentklassifikation (IPC):
***G06Q 20/40*** *(2012.01)*

(52) Gemeinsame Patentklassifikation (CPC):
**G06Q 20/4016**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **30.09.2022 DE 102022125398**

(71) Anmelder: **Bundesdruckerei GmbH**
**10969 Berlin (DE)**

(72) Erfinder:
• **Wilke, Andreas Dr.**
  **13507 Berlin (DE)**
• **Fabian, David**
  **13465 Berlin (DE)**
• **Kunaht-Huhsmann, Neele**
  **10245 Berlin (DE)**
• **Schleich, Wolfgang Prof. Dr.**
  **89081 Ulm (DE)**

(74) Vertreter: **Richardt Patentanwälte PartG mbB**
**Wilhelmstraße 7**
**65185 Wiesbaden (DE)**

(54) **ERKENNEN MISSBRÄUCHLICHER ZAHLUNGSTRANSAKTIONEN**

(57) Die Erfindung betrifft ein Verfahren zum Erkennen missbräuchlicher Zahlungstransaktionen (110) unter Verwendung von protokollierten Transaktionsdaten (122) zu Zahlungstransaktionen. Das Verfahren umfasst ein Bereitstellen von protokollierten Transaktionsdaten (122) zu Zahlungstransaktionen, ein Ausführen einer Anomalieanalyse auf ein Auftreten missbräuchlicher Zahlungstransaktionen (110) hin, ein Identifizieren von Transaktionsparametern (112), deren Werte von ein oder mehreren bestimmten Anomalien umfasst sind, und ein Überwachen der für die identifizierten Transaktionsparameter (112) in den Transaktionsdatensätzen protokollierten Werte, wobei das Überwachen ein Erkennen missbräuchlicher Zahlungstransaktionen (110) umfasst.

| | |
|---|---|
| Bereitstellen protokollier Transaktionsdaten | **200** |
| Erfassen missbräuchliche Transaktionen | **202** |
| Ausführen Anomalieanalyse | **204** |
| Identifizieren Transaktionsparameter | **206** |
| Überwachen Transaktionsdaten | **208** |

Fig. 5

EP 4 345 723 A1

**Beschreibung**

Die Erfindung betrifft ein Verfahren zum Erkennen missbräuchlicher Zahlungstransaktionen und ein Computersystem zum Erkennen missbräuchlicher Zahlungstransaktionen.

Im Zuge der zunehmenden Digitalisierung rücken heutzutage mehr und mehr elektronischen Verfahren zur Zahlungsabwicklung in den Vordergrund. Solche elektronischen Zahlungsverfahren ermöglichen eine effiziente Zahlungsabwicklung, selbst wenn sich Zahlungspflichtiger und Zahlungsempfänger an entfernten Orten aufhalten, wie es beispielsweise bei Einkäufen über das Internet der Fall ist. Andererseits stellt die Abwicklung solcher elektronischer Zahlungsverfahren neue Sicherheitsanforderungen an die zur Zahlungsabwicklung verwendeten Systeme, um Missbrauch zu verhindern. Im Allgemeinen wird versucht Missbrauch durch eine ausgeklügelte Berechtigungsprüfung zu verhindern. Eine erfolgreiche Berechtigungsprüfung ist dabei Voraussetzung für eine Ausführung einer Zahlungstransaktion. Um eine Berechtigung bzw. Autorisierung zum Veranlassen von Zahlungstransaktionen erfolgreich nachweisen zu können sind beispielsweise valide Autorisierungsdaten zum Autorisieren der Zahlungstransaktionen notwendig.

Missbrauch kann aber in unterschiedlicher Form auftreten. So kann es sich bei Zahlungstransaktionen beispielsweise selbst bei einem Vorliegen korrekter Autorisierungsdaten zum Autorisieren der entsprechenden Zahlungstransaktionen um missbräuchliche Zahlungstransaktionen handeln. Beispielsweise können sich Dritte unberechtigter Weise Zugriff auf Daten, wie etwa Autorisierungsdaten zum Autorisieren von Zahlungstransaktionen, verschaffen und damit Zahlungstransaktionen ausführen. Für diese Art missbräuchlicher Zahlungstransaktionen können beispielsweise korrekt Autorisierungsnachweise vorgelegt werden, obwohl sie tatsächlich nicht von den dazu berechtigten Personen oder Entitäten autorisiert wurden. Beispielsweise können auch berechtigte Personen oder Entitäten mittels Täuschung dazu veranlasst werden missbräuchliche Zahlungen zu veranlassen. In diesem Fall liegen beispielsweise korrekte Autorisierungsnachweise vor und die Zahlungstransaktionen werden von den dazu berechtigten Personen oder Entitäten autorisiert. Schließlich kann der Missbrauch auch willentlich von tatsächlich berechtigten Personen oder Entitäten ausgehen. So kann es bei missbräuchlichen Zahlungstransaktionen, etwa im Zuge von Geldwäsche, beispielsweise um Zahlungstransaktionen handeln, welche mit Wissen und Wollen dazu berechtigter Personen oder Entitäten veranlasst werden.

Es stellt sich somit die Herausforderung effiziente Mechanismen zum Erkennen von missbräuchlichen Zahlungstransaktionen zu implementieren, etwa zur Verhinderung von Betrug und/oder Geldwäsche. Diese Herausforderung stellt sich insbesondere dann, wenn für die missbräuchlichen Zahlungstransaktionen korrekte Autorisierungsdaten zum Autorisieren der entsprechenden Zahlungstransaktionen vorliegen.

Der Erfindung liegt daher die Aufgabe zugrunde, ein verbessertes Verfahren zum Erkennen von missbräuchlichen Zahlungstransaktionen zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Erkennen missbräuchlicher Zahlungstransaktionen unter Verwendung von protokollierten Transaktionsdaten zu Zahlungstransaktionen, wobei das Verfahren umfasst:

- Bereitstellen von protokollierten Transaktionsdaten zu Zahlungstransaktionen, wobei das Protokollieren der Transaktionsdaten ein Speichern von Transaktionsdatensätzen in ein oder mehreren Datenbanken umfasst, wobei die Transaktionsdatensätze Werte zu einer Mehrzahl von Transaktionsparametern der protokollierten Zahlungstransaktionen umfassen, wobei die Transaktionsdaten ferner jeweils einen Zeitstempel umfassen,
- auf ein Auftreten missbräuchlicher Zahlungstransaktionen hin, Ausführen einer Anomalieanalyse, wobei die Anomalieanalyse ein Bestimmen von ein oder mehreren Anomalien innerhalb erster Transaktionsdatensätze der gespeicherten Transaktionsdatensätze umfasst, deren protokollierte Werte innerhalb eines zumindest einen Teil der die missbräuchlichen Zahlungstransaktionen umfassenden vordefinierten ersten Zeitintervalls erfasst wurden, wobei die Anomalien jeweils eine Kombination von Werten von Transaktionsparametern der protokollierten Transaktionsdaten sind, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdatensätze unterscheidet, deren Werte in einem vordefinierten zweiten Zeitintervall erfasst wurden, welches keine missbräuchlichen Zahlungstransaktionen umfasst,
- Identifizieren derjenigen Transaktionsparameter, deren Werte von den bestimmten ein oder mehreren Anomalien umfasst sind,
- Überwachen der für die identifizierten Transaktionsparameter in den Transaktionsdatensätzen protokollierten Werte, wobei das Überwachen ein Erkennen eines Auftretens der missbräuchlichen Zahlungstransaktionen umfasst auf ein Erfassen von Werten für die identifizierten Transaktionsparameter innerhalb eines vordefinierten dritten Zeitintervalls, für welche sich ein dritter Unterschied in einer dritten Wahrscheinlichkeit eines Auftretens der entsprechenden Werte innerhalb von dritten Transaktionsdatensätzen der protokollierten Transaktionsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

Ausführungsformen können den Vorteil haben, dass basierend auf der Anomalieanalyse Transaktionsparameter identifiziert werden können, deren Werte von ein oder mehreren Anomalien umfasst werden, welche im Falle von missbräuchlichen Zahlungstransaktionen auftreten.

Da es sich um Anomalien handelt, d.h. um Kombinationen von Werten, deren relative Wahrscheinlichkeit im Falle von missbräuchlichen Zahlungstransaktionen deutlich abweicht von ihrer üblichen relativen Wahrscheinlichkeit, können diese Anomalien als ein Indiz für ein Auftreten entsprechender missbräuchlicher Zahlungstransaktionen verwendet werden. Die Unterschiede in den Wahrscheinlichkeiten sind ein Maß für eine Korrelation zwischen den betrachteten Werten der Transaktionsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation im Zuge eines Auftretens missbräuchlicher Zahlungstransaktionen zu- oder abnimmt. Es wird dabei nach ein oder mehreren Kombinationen von Transaktionsparametern gesucht, für deren Werte sich eine Korrelation im Zuge eines Auftretens missbräuchlicher Zahlungstransaktionen signifikant ändert und die damit als Indikator für das entsprechende Auftreten von missbräuchlichen Zahlungstransaktionen dienen können. Die identifizierten Transaktionsparameter werden den missbräuchlichen Zahlungstransaktionen bzw. einem Identifikator derselben zugeordnet. Die resultierende Zuordnung wird beispielsweise gespeichert und als Vergleichsdatensatz für ein Erkennen eines Auftretens entsprechender missbräuchlichen Zahlungstransaktionen verwendet. Die Idee dahinter ist, dass auch wenn missbräuchliche Zahlungstransaktionen im Einzelfall jeweils anders aussehen können, sie doch ähnliche Muster bilden, welche sich von den üblichen Verteilungen von Zahlungstransaktionen abheben.

Zunächst werden im Zuge einer Anomalieanalyse beispielsweise diejenigen Transaktionsparameter identifiziert, deren Unterschied in den Wahrscheinlichkeiten eine Anomalie in einem missbräuchliche Zahlungstransaktionen umfassenden vordefinierten Zeitintervall aufweist. Eine Anomalie liegt vor, wenn die für das entsprechende vordefinierte Zeitintervall bestimmte Korrelation signifikant von einer Referenzkorrelation bzw. Referenzwahrscheinlichkeiten eines Referenzzeitintervalls abweicht, in welchem keine missbräuchlichen Zahlungstransaktionen aufgetreten sind, d.h. der Unterschied größer oder gleich einem vordefinierten Größenwert ist.

Bei dem zweiten Unterschied in der zweiten Wahrscheinlichkeit des Auftretens der entsprechenden Werte innerhalb von zweiten Transaktionsdatensätze der protokollierten Transaktionsdatensätze unterscheidet, deren Werte in dem vordefinierten zweiten Zeitintervall erfasst wurden, handelt es sich um eine solche Referenzwahrscheinlichkeit für das Auftreten der entsprechenden Werte innerhalb von Referenztransaktionsdatensätze eines Referenzzeitintervalls.

Die Länge des Referenzzeitintervalls, dessen Referenztransaktionsdatensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenztransaktionsdatensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenztransaktionsdatensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Ausführungsformen können den Vorteil haben, dass anhand der Anomalieanalyse Transaktionsparameter für Zahlungstransaktionen ermittelt werden können, bei deren Werten im Zuge eines Auftretens von missbräuchlichen Zahlungstransaktionen Anomalien auftreten. Mit anderen Worten kann bestimmt werden, welche Anomalien innerhalb der in den Transaktionsdatensätzen protokollierten Transaktionsdaten im Zuge von missbräuchliche Zahlungstransaktionen auftreten, die sonst nicht auftreten und mithin für ein Erkennen der entsprechenden missbräuchlichen Zahlungstransaktionen mit einer hohen Wahrscheinlichkeit geeignet sind.

Beispielsweise wird für die Anomalieanalyse ein Satz von missbräuchlichen Zahlungstransaktionen herangezogen, d.h. die ersten Transaktionsdatensätze umfassen ausschließlich protokollierte Transaktionsdatensätze, deren protokollierte Werte innerhalb eines die missbräuchlichen Zahlungstransaktionen des entsprechenden Satzes umfassenden Zeitintervalls erfasst wurden. Beispielsweise wird für die Anomalieanalyse eine Mehrzahl von Sätzen von missbräuchlichen Zahlungstransaktionen herangezogen. Bei den herangezogenen Sätzen handelt es sich beispielsweise um Sätze von ähnlichen missbräuchlichen Zahlungstransaktionen. In diesem Fall wird beispielsweise eine Mehrzahl von ersten Zeitintervallen, d.h. von Zeitintervallen, welche jeweils einen der Sätze von missbräuchlichen Zahlungstransaktionen umfassen, berücksichtigt. Dabei umfassen die ersten Transaktionsdatensätze dann protokollierte Transaktionsdatensätze, deren protokollierte Werte innerhalb eines der ersten Zeitintervalle der Mehrzahl von ersten Zeitintervallen erfasst wurden.

Bei den der Anomalieanalyse und/oder der Überwachung zugrundeliegenden Transaktionsdaten handelt es sich beispielsweise um Transaktionsdaten von Zahlungstransaktionen, welche zumindest eine gemeinsame Eigenschaft aufweisen. Beispielsweise handelt es sich um Zahlungstransaktionen bei welchen dieselbe Person, dieselbe Entität, dasselbe Konto und/oder dasselbe Zahlungsmittel involviert ist. Beispielsweise handelt es sich um Zahlungstransaktionen, bei welchen ein oder mehrere Konten verwendet werden, welche derselben Person oder derselben Entität, zugeordnet sind, etwa als Ausgangskonten oder Zielkonten der Zahlungstransaktionen, oder bei welchen ein oder mehrere Zahlungsmittel, wie etwa eine Kreditkarte oder EC-Karte, verwendet werden, welche derselben Person oder derselben Entität, zugeordnet sind. Beispielsweise handelt es sich um Zahlungstransaktionen, bei welchen jeweils dasselbe Konto, etwa als Ausgangskonten oder Zielkonten der Zahlungstransaktionen, involviert ist. Beispielsweise handelt es sich um Zahlungstransaktionen, bei welchen jeweils dasselbe Zahlungsmittel, wie etwa eine Kreditkarte oder EC-Karte, involviert ist. Beispielsweise handelt es sich um Zahlungstransaktionen, bei welchen jeweils dieselben Finanzinstitute und/oder Zahlungsdienstleister involviert sind. Beispielsweise umfassen die der Anomalieanalyse und/oder der Überwachung zugrundeliegenden Transaktionsdaten auch Transaktionsdaten von Zahlungstransaktionen, in welche beispielsweise unterschiedliche Personen, unterschiedliche Entität, unterschiedliche Konten, unterschiedliche Zahlungsmittel, unterschiedliche Finanzinstitute und/oder unterschiedliche Zahlungsdienstleister involviert sind.

Bei den für die Anomalieanalyse verwendeten Transaktionsdaten handelt es sich beispielsweise um protokollierte Transaktionsdaten von bereits ausgeführten Zahlungstransaktionen. Bei den überwachten Transaktionsdaten handelt es sich beispielsweise ebenfalls um protokollierte Transaktionsdaten von bereits ausgeführten Zahlungstransaktionen. Bei der Überwachung handelt es sich mithin um eine nachträgliche Überprüfung bereits ausgeführten Zahlungstransaktionen auf missbräuchliche Zahlungstransaktionen. Werden missbräuchliche Zahlungstransaktionen erkannt können diese gegebenenfalls rückabgewickelt werden. Alternativer Weise oder zusätzlicher Weise können weitere missbräuchliche Zahlungstransaktionen verhindert werden, indem beispielsweise an den erkannten missbräuchlichen Zahlungstransaktionen beteiligte Konten und/oder Zahlungsmittel gesperrt werden. Bei den überwachten Transaktionsdaten handelt es sich beispielsweise um protokollierte Transaktionsdaten zu auszuführenden Zahlungstransaktionen. Beispielsweise werden die entsprechenden Zahlungstransaktionen erst dann ausgeführt, wenn im Zuge des Überwachens für diese Zahlungstransaktionen keine missbräuchlichen Zahlungstransaktionen erkannt wurden. Beispielsweise handelt es sich bei den überwachten Transaktionsdaten bzw. bei den von dem vordefinierten dritten Zeitintervall umfassten Transaktionsdaten um aktuelle Transaktionsdaten.

Transaktionsdaten bezeichnen Daten, welche Zahlungstransaktionen definieren bzw. beschreiben. Transaktionsdaten umfassen als Transaktionsparameter beispielsweise einen transferierten Betrag, eine Währung, in welcher der Betrag transferiert wird, einen Ausgangsinstanz, etwa ein Ausgangskonto oder ein Zahlungsmittel, von welchem der Betrag transferiert wird, eine Zielinstanz, etwa ein Zielkonto oder ein Zahlungsmittel, an welches der Betrag transferiert wird, Angaben zu Personen oder Entitäten, welche den verwendeten Konten und/oder Zahlungsmittels zugeordnet sind, Angaben zu einem Verwendungszweck des Transferierten Betrags, Angaben zu beteiligten Finanzinstituten, Angaben zu beteiligten Finanzdienstleitern, und/oder Angaben zu Mitteln, welche zur Anweisung der entsprechenden Zahlungstransaktionen verwendet werden. Solche Angaben zu Mittel können beispielsweise Angaben zu IDs, etwa IP-Adressen, verwendeter Computersysteme und/oder Endgeräte, Angaben zu Standorten der verwendeten Computersysteme und/oder Endgeräte und/oder Angaben zu Uhrzeiten der Anweisungen sein.

Die Werte der Transaktionsparameter umfassen beispielsweise numerische Angaben, wie etwa Beträge, Kontonummern oder Kartenummern. Die Werte der Transaktionsparameter umfassen beispielsweise alphanumerische Angaben handeln, wie etwa IBANs. Die Werte der Transaktionsparameter umfassen beispielsweise alphabetische Angaben, wie etwa Namen oder Angaben zu einem Verwendungszweck.

Im Zuge der Anomalieanalyse und/oder des Überwachens von Transaktionsdaten können beispielsweise diskrete Werte der Transaktionsparameter verwendet werden, wie sie in den Transaktionsdatensätzen für die betrachteten Transaktionsparameter protokolliert sind. Im Zuge der Anomalieanalyse und/oder des Überwachens von Transaktionsdaten können beispielsweise Werteintervalle, in welche die Werte der Transaktionsparameter fallen, verwendet werden. Beispielsweise wird ein in den Transaktionsdatensätzen für einen betrachteten Transaktionsparameter protokollierter Wert einem Werteintervall zugeordnet und das entsprechende Werteintervall wird der Anomalieanalyse und/oder dem Überwachen der Transaktionsdaten zugrunde gelegt. Nach Ausführungsformen kann es sich bei Wahrscheinlichkeiten für ein Auftreten von Werten von Transaktionsparametern in Transaktionsdatensätzen beispielsweise um Wahrscheinlichkeiten für ein Auftreten von diskreten Werten handeln. Zur Bestimmung der Wahrscheinlichkeiten werden beispielsweise diejenigen Transaktionsdatensätze in einem vordefinierten Zeitintervalle $\Delta t_i$ berücksichtigt, welche den entsprechenden diskreten Wert für einen bestimmten Transaktionsparameter umfassen. Nach Ausführungsformen kann es sich bei Wahrscheinlichkeiten für ein Auftreten von Werten von Transaktionsparametern in Transaktionsdatensätzen beispielsweise um Wahrscheinlichkeiten für ein Auftreten von Werten handeln, welche von einem bestimmten Werteintervall umfasst sind. Zur Bestimmung der Wahrscheinlichkeiten werden beispielsweise diejenigen Transaktionsdatensätze in einem vordefinierten Zeitintervalle $\Delta t_i$ berücksichtigt, welche für einen bestimmten Transaktionsparameter jeweils einen Wert umfassen, der von dem entsprechenden Werteintervall umfasst sind.

Bei missbräuchlichen Zahlungstransaktionen kann es sich beispielsweise um Zahlungstransaktionen handeln, welche unter Verwendung korrekt Autorisierungsnachweise aber ohne tatsächliche Autorisierung durch eine dazu berechtigte Person oder Entität erfolgt. Beispielsweise können sich Dritte unberechtigter Weise Zugriff auf Daten, wie etwa Autorisierungsdaten zum Autorisieren von Zahlungstransaktionen, verschaffen und damit Zahlungstransaktionen ausführen. Für diese Art missbräuchlicher Zahlungstransaktionen können beispielsweise korrekt Autorisierungsnachweise vorgelegt werden, obwohl sie tatsächlich nicht von den dazu berechtigten Personen oder Entitäten autorisiert wurden. Bei missbräuchlichen Zahlungstransaktionen kann es sich beispielsweise um Zahlungstransaktionen handeln, welche mit tatsächlicher Autorisierung durch eine dazu berechtigte Person oder Entität erfolgen, aber ohne dass die entsprechende Person oder Entität wissentlich und wollend zu dem Missbrauch beiträgt. Beispielsweise können berechtigte Personen oder Entitäten mittels Täuschung dazu veranlasst werden missbräuchliche Zahlungen zu veranlassen. In diesem Fall liegen beispielsweise korrekte Autorisierungsnachweise vor und die Zahlungstransaktionen werden von den dazu berechtigten Personen oder Entitäten autorisiert. Schließlich kann der Missbrauch auch willentlich von tatsächlich berechtigten Personen oder Entitäten ausgehen. Bei missbräuchlichen Zahlungstransaktionen kann es sich beispielsweise um Zahlungstransaktionen handeln, welche mit Wissen und Wollen einer berechtigten Person oder Entität erfolgen. So kann es bei missbräuchlichen Zahlungstransaktionen, etwa im Zuge von Geldwäsche, beispielsweise um Zahlungstransaktionen handeln, welche mit Wissen und Wollen dazu berechtigter Personen oder Entitäten veranlasst werden.

Geldwäsche bezeichnet Verfahren zur Einschleusung illegal erwirtschafteten Geldes bzw. von illegal erworbenen Vermögenswerten in den legalen Finanz- und Wirtschaftskreislauf. So wird im Zuge von Geldwäsche etwa versucht die Herkunft von Geld bzw. Vermögenswerte zu verschleiert. Zum Zwecke der Verschleierung wird das Geld, dessen Herkunft verschleiert werden soll, in einer Vielzahl von Transaktionen hin- und hergeschoben, so dass dessen Herkunft nicht mehr nachzuvollziehen oder zu beweisen ist.

Somit kann beispielsweise eine kriminelle Herkunft nicht mehr nachvollzogen oder bewiesen werden.

Bei den Zahlungstransaktionen kann es sich beispielsweise um Überweisungen handeln, d.h. um Zahlungsinstrument im bargeldlosen Zahlungsverkehr, bei denen ein zahlungspflichtiger Schuldner mittels Weisung an ein kontoführendes Kreditinstitut Buchgeld zu Lasten eines ihm zugeordneten Kontos, etwa eines Girokontos, an ein Kreditinstitut eines Zahlungsempfängers bzw. Gläubigers übertragen lässt. Bei den Zahlungstransaktionen kann es sich beispielsweise um Zahlungstransaktionen unter Verwendung einer Kreditkarte handeln. Bei den Zahlungstransaktionen kann es sich beispielsweise um Zahlungstransaktionen unter Verwendung eines Zahlungsdienstleisters handeln. Bei den Zahlungstransaktionen kann es sich beispielsweise um Zahlungstransaktionen unter Verwendung einer Kryptowährung handeln, bei welcher einzelne Vermögenszuschreibungen in einer dezentralen Datenbank (Distributed-Ledger-Technologie), etwa einer Blockchain, protokolliert werden. Beispielsweise werden die Transaktionsdaten in einer Blockchain protokolliert. Beispielsweise stellen die ein oder mehreren Datenbanken die protokollierten Transaktionsdaten in Form ein oder mehrerer Blockchains bereit. Beispielsweise handelt es sich bei den von den ein oder mehreren Datenbanken bereitgestellten protokollierten Transaktionsdaten um Transaktionsdaten, welche aus ein oder mehreren Blockchains extrahiert und beispielsweise um eine normalisierte Indexstruktur ergänzt. Beispielsweise handelt es sich bei den von den ein oder mehreren Datenbanken bereitgestellten protokollierten Transaktionsdaten um in ein oder mehrere Blockchains einzutragende Transaktionsdaten. Beispielsweise ist es eine Voraussetzung für ein Eintragen der entsprechenden Transaktionsdaten in die ein oder mehreren Blockchains, dass im Zuge der Überwachung der entsprechenden Transaktionsdaten keine missbräuchlichen Zahlungstransaktionen erkannt werden.

Bei einer Blockchain handelt es sich um eine kontinuierlich erweiterbare Liste von Datensätzen in einzelnen Blöcken. Zusätzliche Blöcke werden nach einem Konsensverfahren erstellt und mittels kryptographischer Verfahren an eine bestehende Kette angehängt. Jeder Block umfasst dabei beispielsweise einen kryptographisch sicheren Prüfwert, etwa einen Hash-Wert, des vorhergehenden Blocks und Transaktionsdaten.

Die ein oder mehreren Anomalien in den identifizierten Transaktionsparametern der Zahlungstransaktionen werden beispielsweise den missbräuchlichen Zahlungstransaktionen zugeordnet und die identifizierten Transaktionsparameter werden zur weiteren Überwachung der protokollierten Transaktionsdaten verwendet. Im Zuge der Überwachung der Transaktionsdaten werden nachfolgend protokollierte Transaktionsdaten daraufhin überprüft, ob in diesen identifizierten Transaktionsparametern wieder entsprechende Anomalien auftreten. Entsprechende Anomalien liegen vor, wenn Werte für die identifizierten Transaktionsparameter innerhalb eines vordefinierten Zeitintervalls erfasst werden, für welche sich ein Unterschied in der Wahrscheinlichkeit des Auftretens der entsprechenden Werte innerhalb des entsprechenden Zeitintervalls, mindestens um den vordefinierten Größenwert von einem Referenzunterschied in der Referenzwahrscheinlichkeit des Auftretens der entsprechenden Werte innerhalb von Referenztransaktionsdatensätze eines Referenzzeitintervalls unterscheidet.

Wird ein Auftreten ein oder mehrerer entsprechender Anomalien für Werte der identifizierten Transaktionsparameter erfasst, kann dies als Trigger für ein Erkennen eines Auftretens missbräuchlicher Zahlungstransaktionen verwendet werden. Um das entsprechende Auftreten zu verhindern und/oder einzudämmen können beispielsweise ein oder mehrere vordefinierte Gegenmaßnahmen eingeleitet werden.

Die Länge des Referenzzeitintervalls, dessen Referenztransaktionsdatensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenztransaktionsdatensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenztransaktionsdatensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Nach Ausführungsformen kann ein Auftreten ein oder mehrerer Anomalien in den überwachten Transaktionsdatensätzen als Trigger zum Erkennen eines Auftretens von missbräuchlichen Zahlungstransaktionen dienen. Beispielsweise kann ein Auftreten ein oder mehrerer der entsprechenden Anomalien verwendet werden, um das Auftreten missbräuchlicher Zahlungstransaktionen erkenn zu können, selbst wenn die entsprechenden Zahlungstransaktionen jeweils für sich genommen nicht unverdächtig erscheinen.

Beispielsweise wird das erste Zeitintervall, dessen protokollierte Transaktionsdatensätze zur Anomalieanalyse verwendet werden, variiert. Beispielsweise wird zunächst ein vordefiniertes Zeitintervall, welches die missbräuchlichen Zahlungstransaktionen umfasst, herangezogen. Dieses Zeitintervall kann dann beispielsweise verlängert oder verkürzt werden und/oder in der Zeit zurückverschoben werden, bis eine oder mehrere Anomalien aufgefunden werden deren Wahrscheinlichkeitsunterschiede gegenüber dem Referenzzeitintervall ausreichenden groß ist, d.h. mindestens den vordefinierten Größenwert aufweist. Ein verkürzen des Zeitintervalls, ebenso wie ein Verschieben in der Zeit, sind dahingehen beschränkt, dass das resultierende Zeitintervall weiterhin die missbräuchlichen Zahlungstransaktionen umfassen sollte.

Nach Ausführungsformen handelt es sich bei den Kombinationen von Werten jeweils um Wertepaare., d.h. zwei Werte für zwei Transaktionsparameter der Zahlungstransaktionen. Bei dem Unterschied in den Wahrscheinlichkeiten des Auftretens der Werte eines Wertepaars handelt es sich beispielsweise um eine Differenz zwischen den Wahrscheinlichkeiten für die einzelnen Werte des entsprechenden Wertepaars. Diese Differenz wird beispielsweise in Bezug auf das Auftreten in einem vordefinierten Zeitintervall, etwa das erste oder dritte Zeitintervall, berechnet und mit der entsprechenden Differenz für ein Referenzzeitintervall, d.h. einer Referenzdifferenz, verglichen. Falls ein Unterschied zwischen diesen Differenzen größer oder gleich einem vordefinierten Größenwert ist, liegt eine Anomalie vor.

Ausführungsformen können den Vorteil haben, dass ein effektiver und effizienter Ansatz zum Bestimmen von Anomalien in beliebigen Datensätzen, insbesondere in Transaktionsdatensätzen, bereitgestellt wird.

Die Transaktionsparameter werden beispielsweise als diskrete Zufallsvariablen betrachtet, welche gemäß der Anzahl des Auftretens der ihnen zugeordneten Werte in den Transaktionsdatensätzen verteilt sind. Die Wahrscheinlichkeit, dass ein Transaktionsparameter $X$ den Wert $x$ annimmt, ist:

$$p(X = x) = \frac{|I_X(x)|}{N}.$$

Dabei ist N die Gesamtzahl an Transaktionsdatensätze, welche beispielsweise jeweils anhand einer zugeordneten "ID", d.h. einem zugeordneten Identifikator, eindeutig identifizierbar sind.

Nach Ausführungsformen ist der Unterschied in der Wahrscheinlichkeit eines Auftretens eines ersten Werts $x_0$ eines ersten Transaktionsparameters X eines Wertepaars und eines zweiten Werts $y_0$ eines zweiten Transaktionsparameters Y des Wertepaars innerhalb der Transaktionsdatensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren dritten Transaktionsparameter Z und alle dritten Werte z, welche für den weiteren dritten Transaktionsparameter Z innerhalb der Transaktionsdatensätze der ein oder mehreren Datenbanken protokolliert sind. V(Z) ist die Menge aller protokollierter dritter Werte z der dritten Transaktionsparameter Z. Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden.

Eine Wahrscheinlichkeit eines Auftretens eines dritten Werts z eines weiteren dritten Transaktionsparameters Z in Kombination mit dem ersten Wert $x_0$ des ersten Transaktionsparameters X ist definiert als

$$p_{Z|X=x_0}(z) = \frac{\left|I_Z(z) \cap I_X^{\triangle t_i}(x_0)\right|}{\left|I_X^{\triangle t_i}(x_0)\right|}.$$

$I_X^{\triangle t_i}(x_0)$ ist die Menge der Transaktionsdatensätze des entsprechenden vordefinierten Zeitintervalls $\triangle t_i$ ist, welche den ersten Wert $x_0$ für den ersten Transaktionsparameter X umfassen. $I_Z(z)$ ist die Menge der Transaktionsdatensätze der ein oder mehreren Datenbanken, welche den dritten Wert z für den weiteren dritten Transaktionsparameter Z umfassen. Die Schnittmenge $I_Z(z) \cap I_X^{\triangle t_i}(x_0)$ ist somit die Menge aller Transaktionsdatensätze des vordefinierten Zeitintervalls $\triangle t_i$, welche sowohl den bestimmten dritten Wert z des weiteren dritten Transaktionsparameters Z, als auch den ersten Wert $x_0$ des ersten Transaktionsparameters X umfassen.

Eine Wahrscheinlichkeit eines Auftretens eines dritten Werts z eines weiteren dritten Transaktionsparameters Z in Kombination mit dem zweiten Wert $y_0$ des zweiten Transaktionsparameters Y ist definiert als

$$p_{Z|Y=y_0}(z) = \frac{\left|I_Z(z) \cap I_Y^{\triangle t_i}(y_0)\right|}{\left|I_Y^{\triangle t_i}(y_0)\right|}.$$

$I_Y^{\triangle t_i}(y_0)$ ist die Menge der Transaktionsdatensätze des entsprechenden vordefinierten Zeitintervalls $\triangle t_i$, welche den zweiten Wert $y_0$ für den erste Transaktionsparameter Y umfassen. Die Schnittmenge $I_Z(z) \cap I_Y^{\triangle t_i}(y_0)$ ist somit die Menge aller Transaktionsdatensätze des vordefinierten Zeitintervalls $\triangle t_i$, welche sowohl den bestimmten dritten Wert z des weiteren dritten Transaktionsparameters Z, als auch den zweiten Wert $y_0$ des zweiten Transaktionsparameters Y umfassen.

Nach Ausführungsformen kann es sich bei den vorgenannten Wahrscheinlichkeiten für ein Auftreten von Werten von Transaktionsparametern in den Transaktionsdatensätzen beispielsweise um Wahrscheinlichkeiten für ein Auftreten von bestimmten diskreten Werten handeln. Beispielsweise umfasst ein Transaktionsdatensatz einen Wert $x_0$ für einen Transaktionsparameter X, wenn der entsprechende Transaktionsdatensatz den diskreten Wert $x_0$ für den Transaktionsparameter X identisch umfasst. Beispielsweise umfasst ein Transaktionsdatensatz einen Wert $y_0$ für einen Transaktionsparameter Y, wenn der entsprechende Transaktionsdatensatz den diskreten Wert $y_0$ für den Transaktionsparameter Y identisch umfasst. Beispielsweise umfasst ein Transaktionsdatensatz einen Wert z für einen Transaktionsparameter Z, wenn der entsprechende Transaktionsdatensatz den diskreten Wert z für den Transaktionsparameter Z identisch umfasst.

Nach Ausführungsformen kann es sich bei den vorgenannten Wahrscheinlichkeiten für ein Auftreten von Werten von Transaktionsparametern in den Transaktionsdatensätzen beispielsweise um Wahrscheinlichkeiten für ein Auftreten von Werten aus bestimmten Werteintervallen handeln. Beispielsweise steht der Wert $x_0$ stellvertretenden für ein den Wert $x_0$ umfassendes Werteintervall, etwa ein Werteintervall $(x_1, x_2)$ von $x_1$ bis $x_2$ mit $x_0$ G $(x_1, x_2)$. Beispielsweise umfasst ein Transaktionsdatensatz in diesem Fall einen Wert $x_0$ für einen Transaktionsparameter X, wenn der entsprechende Transaktionsdatensatz irgendeinen Wert $x_i \in (x_1, x_2)$ für den Transaktionsparameter X umfasst. Beispielsweise steht der Wert $y_0$ stellvertretenden für ein den Wert $y_0$ umfassendes Werteintervall, etwa ein Werteintervall $(y_1, y_2)$ von $y_1$ bis $y_2$ mit $y_0 \in (y_1, y_2)$. Beispielsweise umfasst ein Transaktionsdatensatz in diesem Fall einen Wert $y_0$ für einen Transaktionsparameter Y, wenn der entsprechende Transaktionsdatensatz irgendeinen Wert $y_i \in (y_1, y_2)$ für den Transaktionsparameter Y umfasst. Beispielsweise steht der Wert z stellvertretenden für ein den Wert z umfassendes Werteintervall, etwa ein Werteintervall $(z_1, z_2)$ von $z_1$ bis $z_2$ mit $z \in (z_1, z_2)$. Beispielsweise umfasst ein Transaktionsdatensatz in diesem Fall einen Wert z für einen Transaktionsparameter Z, wenn der entsprechende Transaktionsdatensatz irgendeinen Wert $z_i$ E $(z_1, z_2)$ für den Transaktionsparameter Z umfasst.

Zur Bestimmung der Wahrscheinlichkeiten werden beispielsweise diejenigen Transaktionsdatensätze in einem vordefinierten Zeitintervalle $\triangle t_i$ berücksichtigt, welche den entsprechenden diskreten Wert für einen bestimmten Transaktionsparameter umfassen. Nach Ausführungsformen kann es sich bei Wahrscheinlichkeiten für ein Auftreten von Werten von Transaktionsparametern in Transaktionsdatensätzen beispielsweise um Wahrscheinlichkeiten für ein Auftreten von Werten handeln, welche von einem bestimmten Werteintervall umfasst sind. Zur Bestimmung der Wahrscheinlichkeiten werden beispielsweise diejenigen Transaktionsdatensätze in einem vordefinierten Zeitintervalle $\triangle t_i$ be-

rücksichtigt, welche für einen bestimmten Transaktionsparameter jeweils einen Wert umfassen, der von dem entsprechenden Werteintervall umfasst sind.

Ausführungsformen können den Vorteil haben, dass ein effektiver und effizienter Ansatz zum Bestimmen von Anomalien in beliebigen Datensätzen bereitgestellt wird.

Eine in der zugrunde liegenden Datenmenge, d.h. in den ein oder mehreren Datenbanken protokollierten Transaktionsdatendatensätze, gespeicherte Information wird beispielsweise eindeutig identifiziert durch das Tuple (ID, K, V), wobei "ID" ein Identifikator eines entsprechenden Transaktionsdatensatzes, "K" ein entsprechender Transaktionsparameter und "V" ein entsprechender Wert ist. Je nach Reihenfolge, in der auf die einzelnen Komponenten des Tulpes zugegriffen wird, um im Zuge einer Datenbankoperation die entsprechende Information zu verwenden, können beispielsweise unterschiedliche Datenbanktypen identifiziert werden.

Beispielsweise handelt es sich bei der Datenbank um eine dokumentenorientierte Datenbank. In einer dokumentenorientierten Datenbank ist die Zugriffsreihenfolge beispielsweise Transaktionsdatensatz, Transaktionsparameter, Wert. Beispielsweise wird zum Auffinden eines Werts für einen Transaktionsparameter nacheinander auf die Transaktionsdatensätze zugegriffen, in diesen jeweils nach dem entsprechenden Transaktionsparameter gesucht und geprüft, ob für diesen der entsprechende Wert in dem Transaktionsdatensatz eingetragen ist. Eine dokumentenorientierte Datenbank ist eine Datenbank, bei der Dokumente die Grundeinheit zur Speicherung der Daten bilden, d.h. ein entsprechendes Datenbankmanagementsystem speichert die Inhalte der Datenbank inForm der Dokumente ab. Eine dokumentenorientierte Datenbank enthält beispielsweise eine Mehrzahl einzelner Dokumente, welchen jeweils ein eindeutiger Identifikator zugeordnet ist. Hierbei entspricht ein Dokument beispielsweise einer Zeile in einer Datenbanktabelle.

Beispielsweise handelt es sich bei der Datenbank um eine spaltenorientierte Datenbank. In einer spaltenorientierten Datenbank ist die Zugriffsreihenfolge beispielsweise Transaktionsparameter, Transaktionsdatensatz, Wert. Beispielsweise wird zunächst der Transaktionsparameter identifiziert und dann werden für diesen Transaktionsparameter nacheinander die in den einzelnen Transaktionsdatensätzen protokollierten Werte geprüft. Im Falle einer spaltenorientieren Datenbank speichert ein entsprechendes Datenbankmanagementsystem die Inhalte der Datenbank beispielsweise spaltenweise physisch ab.

Beispielsweise handelt es sich bei der Datenbank um eine indexorientierte Datenbank. In einer indexorientierten Datenbank ist die Zugriffsreihenfolge beispielsweise Transaktionsparameter, Wert, Transaktionsdatensatz. Beispielsweise wird unter Verwendung eines Indexes bzw. einer Indexstruktur zunächst geprüft, ob für einen Transaktionsparameter der gesuchte Wert protokolliert wurde, d.h. in den Transaktionsdatensätzen vorkommt, und falls ja, in welchem Transaktionsdatensatz er vorkommt. Die Indexstruktur kann den entsprechenden Transaktionsdatensatz beispielsweise anhand seiner ID identifizieren, mit deren Hilfe dann auf den identifizierten Transaktionsdatensatz zugegriffen werden kann. Im Falle einer indexorientierten Datenbank wird zusätzlich zu den Daten der Datenbank, d.h. der Datenstruktur, eine Indexstruktur bereitgestellt, welche beispielsweise ein Suchen nach bestimmten Inhalten der Datenbank vereinfacht und beschleunigt. So kann die Indexstruktur beispielsweise für jeden in den Transaktionsdatensätzen vorkommenden Transaktionsparameter jeweils angeben, welche Werte für den entsprechenden Transaktionsparameter in den Transaktionsdatensätzen gespeichert sind. Beispielsweise umfasst die Indexstruktur für jeden der Transaktionsparameter jeweils eine Teilstruktur bzw. einen Index, welcher die für diesen Transaktionsparameter in den Transaktionsdatensätzen gespeicherten Werte auflistet. Der Index umfasst beispielsweise für jeden der Werte der Transaktionsparameter jeweils einen Zeiger bzw. Verweise, etwa in Form der IDs der Transaktionsdatensätze, der den Transaktionsdatensatz angibt, in welchem der jeweilige Wert protokolliert ist. Nach Ausführungsformen kann dem Index ferner beispielsweise auch entnommen werden, wann die protokollierten Werte erfasst wurden. Beispielsweise ist diesen jeweils eine entsprechende Zeitangabe zugeordnet.

Dass sich die gespeicherte Information beispielsweise durch Tuple der Form (ID, K, V) eindeutig identifiziert werden, bedeutet, dass die der Anomalieanalyse zugrundeliegende Datenmenge, d.h. die Daten der in der Datenbank protokollierten Transaktionsdatendatensätze, drei Teilmengen umfassen: die Menge der umfassten IDs der Transaktionsdatensätze $\mathcal{I}$, die Menge der umfassten Transaktionsparameter $\mathcal{K}$ und die Menge der umfassten Werte $\mathcal{V}$. Mit anderen Worten umfassen die Daten D der Datenbank beispielsweise eine Kombination dieser drei Teilmengen, d.h.

$$D \subset \mathcal{I} \times \mathcal{K} \times \mathcal{V}.$$

Eine Menge von Werten, welche $k \in \mathcal{K}$ entsprechen, ist gegeben durch

$$V_k = \{v \in \mathcal{V} | \exists i \in I : (i,k,v) \in D\}.$$

Eine Abbildung auf die IDs ist

$$I:\mathcal{K}\rightarrow\bigcup_{k\in\mathcal{K}}\mathrm{Map}(V_k,2^{\mathcal{I}}),\, k\mapsto\left(I_k:v\mapsto\left\{i\in\mathcal{I}\,\middle|\,(i,k,v)\in D\right\}\right).$$

Nach Ausführungsformen ist der Unterschied in der Wahrscheinlichkeit des Auftretens des ersten Werts $x_0$ des ersten Transaktionsparameters X des Wertepaars und des zweiten Werts $y_0$ des zweiten Transaktionsparameters Y des Wertepaars innerhalb der Transaktionsdatensätze eines der vordefinierten Zeitintervalle $\Delta t_i$ definiert als ein redundanzfreier Unterschied der Form:

$$\frac{1}{2}\left(\left\|p_{Z|X=x_0\wedge Y=y_0}-p_{Z|X=x_0}\right\|_1-\left\|p_{Z|X=x_0\wedge Y=y_0}-p_{Z|Y=y_0}\right\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\left\|p_{Z|X=x_0\wedge Y=y_0}-p_{Z|X=x_0}\right\|_1=\frac{1}{2}\cdot\sum_{Z}\sum_{z\in V(Z)}\left|p_{Z|X=x_0\wedge Y=y_0}(z)-p_{Z|X=x_0}(z)\right|,$$

$$\frac{1}{2}\left\|p_{Z|X=x_0\wedge Y=y_0}-p_{Z|Y=y_0}\right\|_1=\frac{1}{2}\cdot\sum_{Z}\sum_{z\in V(Z)}\left|p_{Z|X=x_0\wedge Y=y_0}(z)-p_{Z|Y=y_0}(z)\right|.$$

Eine Wahrscheinlichkeit eines Auftretens eines bestimmten dritten Werts z eines weiteren dritten Transaktionsparameters Z aus der Menge der dritten Transaktionsparameter, über welche summiert wird, in Kombination mit dem ersten Wert $x_0$ des ersten Transaktionsparameters X sowie dem zweiten Wert $y_0$ des zweiten Transaktionsparameters Y ist definiert als

$$p_{Z|X=x_0\wedge Y=y_0}(z)=\frac{\left|I_Z(z)\cap I_X^{\Delta t_i}(x_0)\cap I_Y^{\Delta t_i}(y_0)\right|}{\left|I_X^{\Delta t_i}(x_0)\cap I_Y^{\Delta t_i}(y_0)\right|}.$$

$I_X^{\Delta t_i}(x_0)$ ist die Menge der Transaktionsdatensätze des entsprechenden vordefinierten Zeitintervalls $\Delta t_i$, welche den ersten Wert $x_0$ für den ersten Transaktionsparameter X umfassen. $I_Y^{\Delta t_i}(y_0)$ ist die Menge der Transaktionsdatensätze des entsprechenden vordefinierten Zeitintervalls $\Delta t_i$ ist, welche den zweiten Wert $y_0$ für den zweiten Transaktionsparameter Y umfassen. $I_Z(z)$ ist die Menge der Transaktionsdatensätze der Datenbank, welche den dritten Wert z für den weiteren dritten Transaktionsparameter Z umfassen. Die Schnittmenge $I_Z(z)\cap I_X^{\Delta t_i}(x_0)\cap I_Y^{\Delta t_i}(y_0)$ ist somit die Menge aller Transaktionsdatensätze des vordefinierten Zeitintervalls $\Delta t_i$, welche sowohl den bestimmten dritten Wert z des weiteren dritten Transaktionsparameters Z, als auch den ersten Wert $x_0$ des ersten Transaktionsparameters X und den zweiten Wert $y_0$ des zweiten Transaktionsparameters Y umfassen.

Im Falle des redundanzfreien Unterschieds wird die Wahrscheinlichkeit eines Auftretens der Kombination der Werte $x_0$ und z bzw. $y_0$ und z von der Wahrscheinlichkeit eines Auftretens der Kombination der Werte $x_0$, $y_0$ und z abgezogen.

Ausführungsformen können den Vorteil haben, dass ein effektiver und effizienter Ansatz zum Bestimmen von Anomalien in beliebigen Datensätzen bereitgestellt wird.

Nach Ausführungsformen wird auf das Erkennen der missbräuchlichen Zahlungstransaktionen hin ein Warnhinweis ausgegeben.

Der Warnhinweis kann beispielsweise an einem Computersystem ausgegeben werden, welches die in den Transaktionsdatensätzen protokollierten Werte überwacht und/oder an ein oder mehreren Endgeräten/Terminals und/oder Einzelcomputersystemen eines verteilten Computersystems, welche an der Abwicklung der Zahlungstransaktionen beteiligt sind. Beispielsweise wird der Warnhinweis von dem Computersystem erstellt, welches die Überwachung der Transaktionsdatensätze ausführt, und zum Ausgeben an ein oder mehrere Endgeräte/Terminals und/oder weitere Computersysteme gesendet. Die Ausgabe kann beispielsweise visuell oder akustisch über eine Ausgabevorrichtung einer Benutzerschnittstelle des ausgebenden Computersystems erfolgen. Beispielsweise wird das Warnsignal visuell, etwa auf einem Display, oder akustisch, etwa über einen Lautsprecher, ausgegeben. Ausführungsformen können den Vorteil haben, dass ein oder mehrere Nutzer über das erkannte Auftreten missbräuchlicher Zahlungstransaktionen informiert werden. Dadurch können die Nutzer in die Lage versetzt werden, Maßnahmen zu ergreifen, um die missbräuchlichen Zahlungstransaktionen zu unterbinden und/oder rückgängig zu machen. Beispielsweise können ein oder mehrere der als missbräuchlich erkannten Zahlungstransaktionen blockiert werden. Beispielsweise können ein oder mehrere Zielkonten der als missbräuchlich erkannten Zahlungstransaktionen gesperrt werden. Beispielsweise können ein oder mehrere Ausgangskonten der als missbräuchlich erkannten Zahlungstransaktionen gesperrt werden. Beispielsweise können ein oder mehrere zur Abwicklung der als missbräuchlich erkannten Zahlungstransaktionen verwendeten Zahlungsmittel, wie etwa Kreditkarten oder EC-Karten, gesperrt werden. Beispielsweise können ein oder mehrere der als missbräuchlich erkannten Zahlungstransaktionen rückabgewickelt werden. Ferner können die Nutzer dabei in die Lage versetzt werden, das Erkennen entsprechender missbräuchlich Zahlungstransaktionen an ein oder mehrere zuständige Aufsichtsbehörden zu melden.

Nach Ausführungsformen werden auszuführende Gegenmaßnahmen gegen die missbräuchlichen Zahlungstransaktionen festgelegt. Auf das Erkennen der missbräuchlichen Zahlungstransaktionen hin werden die festgelegten Gegenmaßnahmen automatisch ausgeführt.

Ausführungsformen können den Vorteil haben, dass automatisch auszuführende Gegenmaßnahmen festgelegt und zur automatischen Ausführung im Bedarfsfall hinterlegt werden können. Somit kann ein automatisierter Schutz gegen missbräuchliche Zahlungstransaktionen implementiert werden.

Nach Ausführungsformen umfassen die Gegenmaßnahmen eine oder mehrere der folgenden Maßnahmen: Blockieren einer oder mehrerer der als missbräuchlich erkannten Zahlungstransaktionen, Sperren ein oder mehrerer Zielkonten der als missbräuchlich erkannten Zahlungstransaktionen, Sperren ein oder mehrerer Ausgangskonten der als missbräuchlich erkannten Zahlungstransaktionen, Sperren ein oder mehrerer zur Abwicklung der als missbräuchlich erkannten Zahlungstransaktionen verwendeten Zahlungsmittel, Rückabwickeln einer oder mehrerer der als missbräuchlich erkannten Zahlungstransaktionen.

Beispielsweise können ein oder mehrere der als missbräuchlich erkannten Zahlungstransaktionen blockiert werden. Somit kann verhindert werden, dass die entsprechenden als missbräuchlich erkannten Zahlungstransaktionen erfolgreich ausgeführt werden. Beispielsweise können ein oder mehrere Zielkonten der als missbräuchlich erkannten Zahlungstransaktionen gesperrt werden. Somit kann beispielsweise verhindert werden, dass die entsprechenden Konten für weitere missbräuchliche Zahlungstransaktionen verwendet werden. Ferner können somit gezahlte Beträge der missbräuchlichen Zahlungstransaktionen gesichert und gegebenenfalls zurückgewonnen werden. Beispielsweise können ein oder mehrere Ausgangskonten der als missbräuchlich erkannten Zahlungstransaktionen gesperrt werden. Somit kann verhindert werden, dass die entsprechenden Konten für weitere missbräuchliche Zahlungstransaktionen genutzt werden bzw. weiteren missbräuchlichen Zahlungstransaktionen zum Opfer fallen. Beispielsweise können ein oder mehrere zur Abwicklung der als missbräuchlich erkannten Zahlungstransaktionen verwendeten Zahlungsmittel, wie etwa Kreditkarten oder EC-Karten, gesperrt werden. Somit kann verhindert werden, dass die entsprechenden Zahlungsmittel für weitere missbräuchliche Zahlungstransaktionen genutzt werden bzw. weiteren missbräuchlichen Zahlungstransaktionen zum Opfer fallen. Beispielsweise können ein oder mehrere der als missbräuchlich erkannten Zahlungstransaktionen rückabgewickelt werden. Somit können beispielsweise gezahlte Beträge der missbräuchlichen Zahlungstransaktionen gesichert und gegebenenfalls zurückgewonnen werden. Ferner können die als missbräuchlich erkannten Zahlungstransaktionen beispielsweise automatisch an ein oder mehrere zuständige Aufsichtsbehörden gemeldet werden.

Nach Ausführungsformen erfolgt eine Speicherung der auszuführenden Gegenmaßnahmen beispielsweise durch ein die Transaktionsdatensätze überwachendes Computersystem d.h. ein Überwachungscomputersystem. Ausführungsformen können den Vorteil haben, dass die auszuführenden Gegenmaßnahmen lokal hinterlegt werden und somit im Bedarfsfall lokal zur sofortigen Ausführung bereitstehen. Das Überwachungscomputersystem sendet die auszuführenden Gegenmaßnahmen beispielsweise an weitere Computersysteme, welche die entsprechenden auszuführenden Gegenmaßnahmen ausführen sollen. Beispielsweise sind die Gegenmaßnahmen auf den weiteren Computersystemen gespeichert, welche von dem Überwachungscomputersystem über das Erkennen der missbräuchlichen Zahlungstransaktionen informiert werden, sodass diese auf den Empfang der entsprechenden Information hin die lokal gespeicherten Gegenmaßnahmen ausführen können.

Nach Ausführungsformen umfassen die auszuführenden Gegenmaßnahmen auszuführende Programminstruktionen. Nach Ausführungsformen umfassen die auszuführenden Gegenmaßnahmen durch das die Transaktionsdatensätze überwachende Computersystem auszuführende Programminstruktionen. Nach Ausführungsformen umfassen die auszuführenden Gegenmaßnahmen durch weitere Computersysteme auszuführende Programminstruktionen. Beispielsweise umfassen im Falle eines verteilten Computersystems die auszuführenden Gegenmaßnahmen durch ein oder mehrere weitere Computersysteme bzw. Server des verteilten Computersystems auszuführende Programminstruktionen. Ausführungsformen können den Vorteil haben, dass zum automatischen Ausführen der Gegenmaßnahmen beispielsweise die hinterlegten Programminstruktionen aufgerufen und ausgeführt werden. Diese Programminstruktionen können Programmroutinen zum automatisierten Unterbinden und/oder Rückabwickeln von missbräuchlichen Zahlungstransaktionen bereitstellen.

Nach Ausführungsformen erfolgt das Erkennen der missbräuchlichen Zahlungstransaktionen auf ein Erfassen der Werte für eine vorbestimmte Mindestanzahl von Transaktionsparametern der identifizierten Transaktionsparameter innerhalb des vordefinierten dritten Zeitintervalls hin, für welche sich der dritte Unterschied in der dritten Wahrscheinlichkeit des Auftretens der entsprechenden Werte innerhalb der dritten Transaktionsdatensätzen mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

Ausführungsformen können den Vorteil haben, dass das Verfahren dadurch beispielsweise weniger anfällig gegenüber Abweichungen im Zuge des Auftretens missbräuchlicher Zahlungstransaktionen ist. Beispielsweise können missbräuchliche Zahlungstransaktionen, etwa aufgrund statistischer Abweichung, auftreten, ohne dass für alle identifizierten Transaktionsparameter des Computersystems Anomalien auftreten. Solche Abweichungen können durch eine Verwendung einer Mindestanzahl von Transaktionsparametern der identifizierten Transaktionsparameter ebenfalls abgedeckt werden.

Nach Ausführungsformen erfolgt das Erkennen der missbräuchlichen Zahlungstransaktionen auf ein Erfassen der Werte für alle identifizierten Transaktionsparameter innerhalb des vordefinierten dritten Zeitintervalls hin, für welche sich der dritte Unterschied in der dritten Wahrscheinlichkeit des Auftretens der entsprechenden Werte innerhalb der dritten Transaktionsdatensätzen mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

Ausführungsformen können den Vorteil haben, dass die Gefahr eines False Positive beim Erkennen von missbräuchlichen Zahlungstransaktionen verringert werden kann. Dadurch das ein Auftreten von Anomalien für alle identifizierten Transaktionsparameter notwendig für ein positives Erkennen missbräuchlicher Zahlungstransaktionen ist, erfolgen ein entsprechendes Erkennen nur unter diesen relativ strengen Bedingungen.

Nach Ausführungsformen handelt es sich bei dem vordefinierten Größenwert um einen positiven Größenwert, einen negativen Größenwert oder um den Betrag des Unterschieds zwischen den beiden entsprechenden Unterschieden in den Wahrscheinlichkeiten des Auftretens der entsprechenden Werte.

Dies bedeutet, dass der erste Unterschied bzw. der dritte Unterschied größer sind als der zweite Unterschied. Mit anderen Worten, dass es sich bei der Anomalie um eine relative Abnahme der Korrelation zwischen den Werten der Transaktionsparameter gegenüber einer Referenzkorrelation bzw. dem zweiten Unterschied handelt.

Nach Ausführungsformen handelt es sich bei dem vordefinierten Größenwert um einen negativen Größenwert. Dies bedeutet, dass der erste Unterschied bzw. der dritte Unterschied kleiner sind als der zweite Unterschied. Mit anderen Worten, dass es sich bei der Anomalie um eine relative Zunahme der Korrelation zwischen den Werten der Transaktionsparameter gegenüber der Referenzkorrelation bzw. dem zweiten Unterschied handelt.

Nach Ausführungsformen handelt es sich bei dem vordefinierten Größenwert um den Betrag des Unterschieds zwischen den beiden entsprechenden Unterschieden in den Wahrscheinlichkeiten des Auftretens der entsprechenden Werte handelt. Durch Verwendung des Betrags lassen Anomalien sowohl in Form einer Zunahme, als auch Abnahmen der Korrelation berücksichtigen.

Nach Ausführungsformen handelt es sich bei dem vordefinierten Größenwert um einen prozentualen Größenwert. Nach Ausführungsformen handelt es sich bei dem vordefinierten Größenwert um einen absoluten Größenwert, d.h. eine Differenz.

Nach Ausführungsformen umfasst das Speichern der Transaktionsdatensätze ein Erstellen und Speichern eines normalisierten Index der von den Transaktionsdatensätzen umfassten Werte für die Transaktionsparameter umfasst. Die Anomalieanalyse wird unter Verwendung des normalisierten Indexes ausgeführt.

Nach Ausführungsformen umfasst das Speichern der Transaktionsdaten ein Normalisieren der Transaktionsdaten in Form des normalisierten Indexes. Nach Ausführungsformen erfüllt das Normalisieren die sechste Normalform erfüllt. Ausführungsformen können den Vorteil haben, dass Redundanzen vermieden werden können. Ausführungsformen können den Vorteil haben, dass eine zeitliche Einordnung der Transaktionsdaten berücksichtigt wird.

Nach Ausführungsformen können die Transaktionsdaten in Form von Relationen oder äquivalenten Strukturen gespeichert sein. Unter einer Relation wird hier im Sinn der relationalen Datenbanktheorie eine Menge von Tupel verstanden. Ein Tupel ist eine Menge von Attributwerten. Ein Attribut bezeichnet einen Datentyp bzw. eine ein oder mehreren Daten zugeordnete Eigenschaft. Dabei bestimmt die Anzahl der Attribute den Grad, die Anzahl der Tupel die Kardinalität einer Relation.

Unter einer Normalisierung, insbesondere unter einer Normalisierung eines relationalen Datenmodells, wird eine Aufteilung von Attributen in eine Mehrzahl von Relationen gemäß einer Normalisierungsregel verstanden, sodass Redundanzen reduziert bzw. minimiert werden. Ein relationales Datenmodell lässt sich beispielsweise in tabellenartigen Datenstrukturen implementieren, in denen die Relationen in Form von Tabellen, die Attribute in Form von Tabellenspalten und die Tupel in Form von Tabellenzeilen realisiert sind.

Datenredundanzen haben die Gefahr, dass es bei Änderungen von Daten, welche mehrfach umfasst sind, zu Inkonsistenzen kommen kann und Anomalien auftreten. Ferner steigt durch Redundanzen unnötiger Weise der Speicherplatzbedarf. Durch eine Normalisierung können solche Redundanzen verringert bzw. minimiert werden. Ein relationales Datenmodell kann beispielsweise in eine Normalform gebracht werden, indem die Relationen des Datenschemas fortschreitend anhand der für die entsprechende Normalform geltenden funktionalen Abhängigkeiten in einfachere Relationen zerlegt.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF).

Die Normalisierungskriterien nehmen dabei von Normalform zu Normalform zu und umfassen jeweils die Normalisierungskriterien der vorhergehenden Normalformen, d.h. $1NF \subseteq 2NF \subseteq 3NF \subseteq BCNF \subseteq 4NF \subseteq 5NF \subseteq 6NF$.

Eine Relation ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attribute, d.h. relationenwertigen Attributwertebereichen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst.

Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Nach Ausführungsformen handelt es sich bei der Datenbank um eine Multi-Modell Datenbank mit einem Multi-Modell-Datenbankmanagementsystem, welches zum Speichern der Transaktionsdaten eine Mehrzahl von Datenmodellen verwendet. Beispielsweise werden die Transaktionsdaten in einem ersten dokumentenorientierten Datenmodell gespeichert. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Somit kann jederzeit auf die ursprünglichen Datenbestände zurückgreifen und diese in bei der weiteren Verarbeitung berücksichtigen. Basierend auf diesem Datenpool an Rohdaten, welchen das dokumentenbasierte Datenmodell bereitstellt, wird die Normalisierung der Daten ausgeführt und ein Index erzeugt. Bei diesem Index handelt es sich beispielsweise um eine inhaltsbasierte mehrstufige Indexstruktur. Dieser Index stellt ein zweites Datenmodell dar, welches beispielsweise die sechste Normalform aufweist. So können alle Felder und Feldinhalte redundanzfrei von dem ersten Datenmodell in das normalisierte zweite Datenmodell übertragen werden, welches beispielsweise die Form eines mehrdimensionalen Schlüssel/Wert-Speichers (Key/Value-Store) bzw. einer mehrdimensionalen Key-Value-Datenbanken aufweist.

Beispielsweise werden zusätzlich Transaktionszeit und Gültigkeitszeit der Datensätze bitemporal gespeichert. Die Transaktionszeit gibt den Zeitpunkt an, zu dem eine Änderung eines Datenobjekts in der Datenbank erfolgt. Die Gültigkeitszeit gibt einen Zeitpunkt oder Zeitintervall an, in dem ein Datenobjekt im modellierten Abbild der realen Welt den beschriebenen Zustand aufweist. Sind sowohl Gültigkeits- als auch Transaktionszeit relevant, spricht man von bitemporal. Zu jedem Datensatz wird mithin nicht nur der Zustand des Datensatzes bei der letzten Transaktion bzw. Änderung ersichtlich, sondern auch dessen Historie. In diesem Fall spricht man von bitemporaler Datenbank, bei welcher sowohl Gültigkeits- als auch Transaktionszeit der Datensätze berücksichtigt werden.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

Ausführungsformen können den Vorteil haben, dass die Transaktionsdaten in beiden Datenmodellen abgespeichert und für Analysen zur Verfügung gestellt werden können.

Nach Ausführungsformen führt das die Transaktionsdaten protokollierende Computersystem selbst die Anomalieanalyse durch. Nach Ausführungsformen führt ein weiteres Computersystem die Anomalieanalyse durch. Nach Ausführungsformen überwacht das die Transaktionsdaten protokollierende Computersystem selbst die Transaktionsdaten. Nach Ausführungsformen überwacht ein weiteres Computersystem die Transaktionsdaten.

Nach Ausführungsformen führt ein Analysecomputersystem, d.h. ein zusätzliches zu dem die Transaktionsdaten protokollierenden Computersystem bereitgestelltes Computersystem, die Anomalieanalyse durch. Dies kann beispielsweise der Fall sein, falls es sich bei dem die Transaktionsdaten protokollierende Computersystem um einen Server eines verteilten Computersystems handelt, welches eine Mehrzahl von Servern umfasst. Beispielsweise sind ein oder mehrere der Server in eine Abwicklung der überwachten Zahlungstransaktionen eingebunden. Beispielsweise führt einer der Server als Analysecomputersystem die Transaktionsdatenanalyse für ein, mehrere und/oder alle Einzelcomputersysteme bzw. Server des verteilten Computersystems durch, welche die Zahlungstransaktionen abwickeln. Nach Ausführungsformen handelt es sich bei den ein oder mehreren Datenbanken um Datenbanken einer Mehrzahl von Servern des verteilten Computersystems. Das Protokollieren der Transaktionsdaten in den ein oder mehreren Datenbanken kann beispielsweise lokal auf den einzelnen Servern durch die jeweiligen Server erfolgen, wobei das Analysecomputersystem beispielsweise Zugriff auf die lokal gespeicherten Transaktionsdatensätze besitzt. Das Protokollieren der Transaktionsdaten kann beispielsweise in einer oder mehreren zentralen Datenbanken erfolgen, auf welche sowohl das oder die protokollierenden Computersysteme bzw. Server als auch das Analysecomputersystem Zugriff besitzen. Nach Ausführungsformen handelt es sich bei der Datenbank um eine Datenbank des Analysecomputersystems.

Zum Ausführen der Anomalieanalyse benötigt das Analysecomputersystem Zugriff auf die zu analysierenden Transaktionsdatensätze. Dieser Zugriff kann beispielsweise einen Zugriff auf ein oder mehrere Datenbänke umfassen, in welchen die zu analysierenden Transaktionsdatensätze gespeichert sind. Beispielsweise sendet das Computersystem die entsprechenden Transaktionsdatensätze zur Anomalieanalyse an das Analysecomputersystem.

Nach Ausführungsformen überwachen ein oder mehrere Überwachungscomputersysteme die protokollierten Transaktionsdaten. Beispielsweise überwacht ein Überwachungscomputersystem die protokollierten Transaktionsdaten. Hierzu empfängt das Überwachungscomputersystem beispielsweise die im Zuge der Anomalieanalyse identifizierte Transaktionsparameter von einem oder mehreren die Analyse ausführenden Analysecomputersystemen. Für diese von den ein oder mehreren Analysecomputersystemen identifizierten Transaktionsparameter werden dann beispielsweise von den ein oder mehreren Überwachungscomputersystemen die in den Transaktionsdatensätzen protokollierten Werte überwacht. Beispielsweise wird eine Mehrzahl von Analysecomputersystemen für eine parallelisierte Analyse der protokollierten Transaktionsdaten verwendet. Beispielsweise werden den Analysecomputersystemen im Zuge der Parallelisierung der Analyse jeweils unterschiedlicher Zeitintervalle bzw. Zeitfenster mit missbräuchlichen Zahlungstransaktionen zugewiesen, für welche die entsprechenden Analysecomputersysteme jeweils die Analyse durchführen. Beispielsweise wird eine Mehrzahl von Überwachungscomputersystemen für eine parallelisierte Überwachung der protokollierten Transaktionsdaten verwendet. Beispielsweise werden den Überwachungscomputersystemen im Zuge der Parallelisierung der Überwachung jeweils unterschiedliche zu überwachende Transaktionsparameter und/oder unterschiedliche zu überwachende Transaktionsdatensätze zugewiesen, für welche die entsprechenden Überwachungscomputersysteme jeweils die Überwachung durchführen. Beispielsweise sind diese Transaktionsdatensätze jeweils ein oder mehreren Kontoinhabern, Konten, Zahlungsmittelinhabern und/oder Zahlungsmitteln zugeordnet und umfassen beispielsweise sämtliche Zahlungstransaktionen, in welche die den entsprechenden Kontoinhabern zugeordneten Konten, die entsprechenden Konten, die den entsprechenden Zahlungsmittelinhabern zugeordneten Zahlungsmitteln und/oder die entsprechenden Zahlungsmittel involviert sind.

Ausführungsformen umfassen ferner ein Computersystem mit einem Prozessor und einem Speicher. In dem Speicher sind Programminstruktionen gespeichert. Ein Ausführen der Programminstruktionen durch den Prozessor veranlasst den Prozessor dazu das Computersystem so zu steuern, dass das Computersystem ein Verfahren zum Erkennen missbräuchlicher Zahlungstransaktionen unter Verwendung von protokollierten Transaktionsdaten zu Zahlungstransaktionen ausführt.

Das Verfahren umfasst:

- Bereitstellen von protokollierten Transaktionsdaten zu Zahlungstransaktionen, wobei das Protokollieren der Transaktionsdaten ein Speichern von Transaktionsdatensätzen in ein oder mehreren Datenbanken umfasst, wobei die Transaktionsdatensätze Werte zu einer Mehrzahl von Transaktionsparametern der protokollierten Zahlungstransaktionen umfassen, wobei die Transaktionsdaten ferner jeweils einen Zeitstempel umfassen,
- auf ein Auftreten missbräuchlicher Zahlungstransaktionen hin, Ausführen einer Anomalieanalyse, wobei die Anomalieanalyse ein Bestimmen von ein oder mehreren Anomalien innerhalb erster Transaktionsdatensätze der gespeicherten Transaktionsdatensätze umfasst, deren protokollierte Werte innerhalb eines zumindest einen Teil der die missbräuchlichen Zahlungstransaktionen umfassenden vordefinierten ersten Zeitintervalls erfasst wurden, wobei die Anomalien jeweils eine Kombination von Werten von Transaktionsparametern der protokollierten Transaktionsdaten sind, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdatensätze unterscheidet, deren Werte in einem vordefinierten zweiten Zeitintervall erfasst wurden, welches keine missbräuchlichen Zahlungstransaktionen umfasst,
- Identifizieren derjenigen Transaktionsparameter, deren Werte von den bestimmten ein oder mehreren Anomalien umfasst sind,
- Überwachen der für die identifizierten Transaktionsparameter in den Transaktionsdatensätzen protokollierten Werte, wobei das Überwachen ein Erkennen eines Auftretens der missbräuchlichen Zahlungstransaktionen umfasst auf ein Erfassen von Werten für die identifizierten Transaktionsparameter innerhalb eines vordefinierten dritten Zeitintervalls, für welche sich ein dritter Unterschied in einer dritten Wahrscheinlichkeit eines Auftretens der entsprechenden Werte innerhalb von dritten Transaktionsdatensätzen der protokollierten Transaktionsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

Nach Ausführungsformen ist das Computersystem dazu konfiguriert jede der zuvor beschriebenen Ausführungsform des Verfahrens zum Erkennen missbräuchlicher Zahlungstransaktionen unter Verwendung von protokollierten Transaktionsdaten zu Zahlungstransaktionen auszuführen.

Nach Ausführungsformen handelt es sich bei den bereitgestellten Transaktionsdaten um Transaktionsdaten, welche das Computersystem selbst protokolliert. Beispielsweise handelt es sich bei den bereitgestellten Transaktionsdaten um Transaktionsdaten, welche von ein oder mehreren weiteren Computersystemen, etwa ein oder mehreren Servern eines verteilten Computersystems, protokolliert und dem entsprechenden Computersystem zur Verfügung gestellt werden.

Beispielsweise wird im Falle eines Erkennens missbräuchlicher Zahlungstransaktionen ein Warnhinweis auf dem entsprechenden Computersystem ausgegeben und/oder an ein oder mehrere weitere Computersysteme zur Ausgabe gesendet wird.

Nach Ausführungsformen handelt es sich bei den Kombinationen von Werten jeweils um Wertepaare.

Nach Ausführungsformen ist der Unterschied in der Wahrscheinlichkeit eines Auftretens eines ersten Werts $x_0$ eines ersten Transaktionsparameters X eines Wertepaars und eines zweiten Werts $y_0$ eines zweiten Transaktionsparameters Y des Wertepaars innerhalb der Transaktionsdatensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren dritten Transaktionsparameter Z und alle dritten Werte z, welche für die weiteren dritten Transaktionsparameter Z innerhalb der Transaktionsdatensätze der Datenbank protokolliert sind. Eine Wahrscheinlichkeit eines Auftretens eines dritten Werts z eines weiteren dritten Transaktionsparameters Z in Kombination mit dem ersten Wert $x_0$ der ersten Transaktionsparameter X ist definiert als

$$p_{Z|X=x_0}(z) = \frac{\left|I_Z(z) \cap I_X^{\triangle t_i}(x_0)\right|}{\left|I_X^{\triangle t_i}(x_0)\right|}.$$

$I_X^{\triangle t_i}(x_0)$ ist die Menge der Transaktionsdatensätze des entsprechenden vordefinierten Zeitintervalls $\triangle t_i$, welche den ersten Wert $x_0$ für den ersten Transaktionsparameter X umfassen. $I_Z(z)$ ist die Menge der Transaktionsdatensätze der Datenbank, welche den dritten Wert z für den weiteren dritten Transaktionsparameter Z umfassen. Eine Wahrscheinlichkeit eines Auftretens eines dritten Werts z eines weiteren dritten Transaktionsparameters Z in Kombination mit dem zweiten Wert $y_0$ des zweiten Transaktionsparameters Y ist definiert als

$$p_{Z|Y=y_0}(z) = \frac{\left|I_Z(z) \cap I_Y^{\triangle t_i}(y_0)\right|}{\left|I_Y^{\triangle t_i}(y_0)\right|}.$$

$I_Y^{\triangle t_i}(y_0)$ ist die Menge der Transaktionsdatensätze des entsprechenden vordefinierten Zeitintervalls $\triangle t_i$ ist, welche den zweiten Wert $y_0$ für den erste Transaktionsparameter Y umfassen.

Nach Ausführungsformen ist der Unterschied in der Wahrscheinlichkeit des Auftretens des ersten Werts $x_0$ des ersten Transaktionsparameters X des Wertepaars und des zweiten Werts $y_0$ des zweiten Transaktionsparameters Y des Wertepaars innerhalb der Transaktionsdatensätze eines der vordefinierten Zeitintervalle $\triangle t_i$ definiert ist als ein redundanzfreier Unterschied der Form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right)$$

Dabei gilt:

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|,$$

$$\frac{1}{2}\left\|p_{Z|X=x_0 \wedge Y=y_0} - p_{Z|Y=y_0}\right\|_1 = \frac{1}{2} \cdot \sum_Z \sum_{z \in V(Z)} \left|p_{Z|X=x_0 \wedge Y=y_0}(z) - p_{Z|Y=y_0}(z)\right|.$$

Ferner gilt:

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

$I_X^{\triangle t_i}(x_0)$ ist die Menge der Transaktionsdatensätze des entsprechenden vordefinierten Zeitintervalls $\triangle t_i$, welche den ersten Wert $x_0$ für den ersten Transaktionsparameter X umfassen. $I_Y^{\triangle t_i}(y_0)$ ist die Menge der Transaktionsdatensätze des entsprechenden vordefinierten Zeitintervalls $\triangle t_i$ ist, welche den zweiten Wert $y_0$ für den zweiten Transaktionsparameter Y umfassen. $I_Z(z)$ ist die Menge der Transaktionsdatensätze der Datenbank, welche den dritten Wert z für den weiteren dritten Transaktionsparameter Z umfassen. Die Schnittmenge $I_Z(z) \cap I_X^{\triangle t_i}(x_0) \cap I_Y^{\triangle t_i}(y_0)$ ist somit die Menge aller Transaktionsdatensätze des vordefinierten Zeitintervalls $\triangle t_i$, welche sowohl den bestimmten dritten Wert z des weiteren dritten Transaktionsparameters Z, als auch den ersten Wert $x_0$ des ersten Transaktionsparameters X und den zweiten Wert $y_0$ des zweiten Transaktionsparameters Y umfassen.

Im Falle des redundanzfreien Unterschieds wird die Wahrscheinlichkeit eines Auftretens der Kombination der Werte $x_0$ und z bzw. $y_0$ und z von der Wahrscheinlichkeit eines Auftretens der Kombination der Werte $x_0$, $y_0$ und z abgezogen.

Beispielsweise ist das Computersystem in Form eines verteilten Computersystems implementiert, welches beispielsweise eine Mehrzahl von Servern umfasst. Beispielsweise umfasst das System ein oder mehrere Server, d.h. Protokollierungsserver, welche Transaktionsdaten zu Zahlungstransaktionen protokollieren und zur Analyse bereitstellen. Beispielsweise umfasst das System ein oder mehrere Analyseserver, welche die Anomalieanalyse ausführen und die Transaktionsparameter identifizieren, deren Werte von ein oder mehreren bestimmten Anomalien umfasst sind. Beispielsweise umfasst das System ein oder mehrere Überwachungsserver, welche die für die identifizierten Transaktionsparameter in den Transaktionsdatensätzen protokollierten Werte überwachen. Die zu überwachenden Transaktionsdatensätzen werden den Überwachungsserver beispielsweise von den Protokollierungsservern zur Verfügung gestellt.

Nach Ausführungsformen ist das verteilte Computersystem dazu konfiguriert jede der zuvor beschriebenen Ausführungsform des Verfahrens zum Erkennen missbräuchlicher Zahlungstransaktionen unter Verwendung von protokollierten Transaktionsdaten zu Zahlungstransaktionen auszuführen.

Unter einer "Datenbank" wird hier eine gespeicherte Menge von Daten verstanden. Die Menge von Daten kann strukturiert sei, beispielsweise gemäß einer für die Datenbank vorgegebenen Struktur. Ferner kann zur Verwaltung der Daten der Datenbank ein "Datenbankmanagementsystem" bzw. eine Datenverwaltungssoftware bereitgestellt werden. Unter einem "Datenbankmanagementsystem" wird hier eine auf einem Computersystem ausgeführte Datenverwaltungssoftware zum Speichern und Wiedergewinnen von Daten in einer Datenbank verstanden. Beispielsweise gibt das Datenbankmanagementsystem die für die Speicherung der Daten zu verwendende Struktur vor. Je nach der verwendeten Datenverwaltungssoftware können die Daten in unterschiedlicher Form bzw. unter Verwendung unterschiedlicher Strukturen gespeichert werden. Beispielsweise werden die Daten in Datensätzen aus jeweils mehreren Datenfeldern gespeichert werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Im Weiteren werden Ausführungsformen der Erfindung mit Bezugnahme auf die Zeichnungen näher erläutert. Es zeigen:

Figur 1   ein schematisches Diagramm eines exemplarischen Computersystems zum Erkennen von missbräuchlichen Zahlungstransaktionen,

Figur 2   ein schematisches Diagramm einer exemplarischen Transaktionsdatenanalyse zum Erkennen von missbräuchlichen Zahlungstransaktionen,

Figur 3   ein schematisches Diagramm einer exemplarischen Transaktionsdatenanalyse zum Erkennen von missbräuchlichen Zahlungstransaktionen,

Figur 4   ein schematisches Diagramm einer exemplarischen Transaktionsdatenanalyse zum Erkennen von missbräuchlichen Zahlungstransaktionen,

Figur 5   ein Flussdiagramm eines exemplarischen Verfahrens zum Erkennen von missbräuchlichen Zahlungstransaktionen und

Figur 6   ein Flussdiagramm eines exemplarischen Verfahrens zum Erkennen von missbräuchlichen Zahlungstransaktionen.

Elemente der nachfolgenden Ausführungsformen, die einander entsprechen, werden mit denselben Bezugszeichen gekennzeichnet.

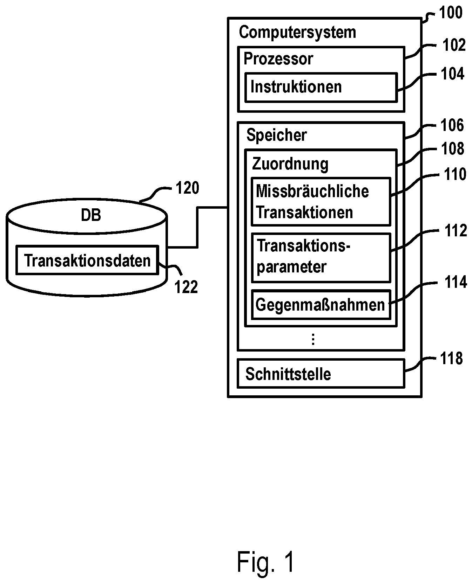

Figur 1 zeigt ein Computersystem 100 zum Erkennen missbräuchlicher Zahlungstransaktionen 110. Hierzu analysiert und überwacht das Computersystem 100 Transaktionsdaten 122. Das Computersystem 100 umfasst einen Prozessor 102, einen Speicher 106 und eine Kommunikationsschnittstelle 118. Der Prozessor 102 ist dazu konfiguriert unter Ausführen von Programminstruktion 104 das Computersystem 100 zum Analysieren von Transaktionsdaten 122 und Erkennen missbräuchlicher Zahlungstransaktionen 110 zu steuern. Das Computersystem besitzt Zugriff auf protokolliert Transaktionsdaten 122. Die protokollierten Transaktionsdaten 122 werden bereitgestellt in Form von Transaktionsdatensätzen, welche in ein oder mehreren Datenbank 120 gespeichert sind. Beispielsweise protokolliert das Computersystem 100 die Transaktionsdaten 122. Beispielsweise werden die Transaktionsdaten 122 durch ein oder mehrere weitere Computersysteme protokolliert. Die Transaktionsdatensätze umfassen Werte zu einer Mehrzahl von Transaktionsparametern zu einer Mehrzahl überwachter Zahlungstransaktionen. Beispielsweise handelt es sich bei den überwachten Zahlungstransaktionen um auszuführende Zahlungstransaktionen. Beispielsweise ist eine Überprüfung der überwachten Zahlungstransaktionen durch das Computersystem 100 eine Voraussetzung für ein Ausführen der Zahlungstransaktionen. Werden missbräuchliche Zahlungstransaktionen 110 unter den auszuführenden Zahlungstransaktionen erkannt, kann deren Ausführung beispielsweise unterbunden werden. Werden innerhalb eines überprüften Zeitintervalls mit auszuführenden Zahlungstransaktionen beispielsweise keine missbräuchlichen Zahlungstransaktionen 110 erkannt, werden die entsprechenden Zahlungstransaktionen ausgeführt. Beispielsweise handelt es sich bei den überwachten Zahlungstransaktionen um ausgeführte Zahlungstransaktionen. Beispielsweise kann mittels der Überprüfung der überwachten Zahlungstransaktionen durch das Computersystem 100 sichergestellt werden, dass missbräuchliche Zahlungstransaktionen 110 erkannten und Gegenmaßnahmen veranlasst werden können. Das Computersystem 100 besitzt Zugriff auf die ein oder mehreren Datenbanken 122. Beispielsweise umfasst das Computersystem 100 ein oder mehrere entsprechende Datenbanken 120. Beispielsweise handelt es sich bei den ein oder mehreren Datenbanken 120 um externe bzw. entfernte Datenbanken. Die Transaktionsdaten 122 werden beispielsweise jeweils mit einer Zeitangabe, etwa einem Zeitstempel, protokolliert. Diese Zeitangabe gibt beispielsweise an, wann die entsprechende Zahlungstransaktion angewiesen wurde, ausgeführt wurde und/oder ausgeführt werden soll. Die Zuordnung von Zahlungstransaktionen zu Zeitintervallen erfolgt beispielsweise unter Verwendung dieser Zeitangabe. Somit lassen sich die protokollierten Werte bzw. die sie umfassenden Transaktionsdatensätze Zeitintervallen zuordnen.

Auf ein Auftreten missbräuchlicher Zahlungstransaktionen 110 hin führt das Computersystem 100 eine Anomalieanalyse unter Verwendung der Transaktionsdaten 122 aus. Im Zuge der Anomalieanalyse werden ein oder mehreren Anomalien innerhalb erster Transaktionsdatensätze der Transaktionsdaten 122 bestimmt, deren protokollierte Werte innerhalb eines zumindest einen Teil der die missbräuchlichen Zahlungstransaktionen 110 umfassenden vordefinierten ersten Zeitintervalls erfasst wurden. Anomalien treten jeweils in Form von Kombinationen von Werten von Transaktionsparametern der protokollierten Transaktionsdaten 122 auf, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdaten 122 unterscheidet, deren Werte in einem vordefinierten zweiten Zeitintervall erfasst wurden. Basierend auf dieser Anomalieanalyse werden diejenigen Transaktionsparameter 112 identifiziert, deren Werte von den bestimmten ein oder mehreren Anomalien umfasst werden. Die Unterschiede in den Wahrscheinlichkeiten sind ein Maß für eine Korrelation zwischen den betrachteten Werten der Transaktionsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation bei einem Auftreten von missbräuchlichen Zahlungstransaktionen zu- oder abnimmt. Es wird dabei nach ein oder mehreren Kombinationen von Transaktionsparametern gesucht, für deren Werte sich eine Korrelation im Zuge eines Auftretens missbräuchlicher Zahlungstransaktionen 110 signifikant ändert und die damit als Indikator für dieses Auftreten bzw. die entsprechenden missbräuchlicher Zahlungstransaktionen 110 dienen können. Die identifizierten Transaktionsparameter 112 werden beispielsweise den entsprechenden missbräuchlicher Zahlungstransaktionen 110 bzw. einem bestimmten Typus von missbräuchlichen Zahlungstransaktionen 110 etwa unter Verwendung eines Identifikators des entsprechenden Typus zugeordnet. Die resultierende Zuordnung 108 wird gespeichert und als Vergleichsdatensatz für ein Erkennen eines erneuten Auftretens entsprechender missbräuchlicher Zahlungstransaktionen 110 verwendet. Die Zuordnung kann beispielsweise in dem Speicher 106 Computersystem 100 oder in einer der ein oder mehreren Datenbanken 120 gespeichert werden.

Weitere Transaktionsdaten 122, welche in den ein oder mehreren Datenbanken 120 protokolliert werden, werden von dem Computersystem 100 oder einem anderen Computersystem, welchem beispielsweise die Zuordnung 108 vorliegt und/oder welches Zugriff auf die Zuordnung 108 besitzt, kontinuierlich überwacht. Falls Werte für die identifizierten Transaktionsparameter 112 der Zuordnung 108 innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Transaktionsdatensätzen der protokollierten Transaktionsdaten 122, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet, wird ein Auftreten der zugeordneten missbräuchlicher Zahlungstransaktionen 110 erkannt. Beispielsweise wird auf das Erkennen missbräuchlicher Zahlungstransaktionen 110 hin ein Warnhinweis auf dem Computersystem 100 ausgegeben. Beispielsweise wird der Warnhinweis über eine Nutzerschnittstelle des Computersystems 100 auf einer Ausgabevorrichtung des Computersystems 100, wie etwa einem Display, ausgegeben. Beispielsweise wird auf das Erkennen missbräuchlicher Zahlungstransaktionen 110 hin über die Kommunikationsschnittstelle des Computersystem 100 an andere Computersysteme ausgegeben, welche an der Ausführung der als missbräuchlich erkannten Zahlungstransaktionen beteiligt sind.

Ferner können auf das Erkennen der missbräuchlichen Zahlungstransaktionen 110 auszuführende Gegenmaßnahmen 114 zur Vermeidung oder Beschränkung der Auswirkungen der missbräuchlichen Zahlungstransaktionen 110 festgelegt und der Zuordnung 108 hinzugefügt werden. Beispielsweise umfassen die Gegenmaßnahmen 114 ausführbare Programminstruktionen, welche zur Vermeidung oder Beschränkung der Auswirkungen der missbräuchlichen Zahlungstransaktionen 110 auszuführen sind. Auf das Erkennen der missbräuchlichen Zahlungstransaktionen 110 hin, werden die Gegenmaßnahmen 114, beispielsweise von dem Computersystem 100 und/oder weiteren Computersystemen, automatisch ausgeführt. Die Gegenmaßnahmen 114 umfassen beispielsweise ein Blockieren einer oder mehrerer der als missbräuchlich erkannten Zahlungstransaktionen 110, ein Sperren ein oder mehrerer Zielkonten der als missbräuchlich erkannten Zahlungstransaktionen 110, ein Sperren ein oder mehrerer Ausgangskonten der als missbräuchlich erkannten Zahlungstransaktionen 110, ein Sperren ein oder mehrerer zur Abwicklung der als missbräuchlich erkannten Zahlungstransaktionen 110 verwendeten Zahlungsmittel, und/oder ein Rückabwickeln einer oder mehrerer der als missbräuchlich erkannten Zahlungstransaktionen 110.

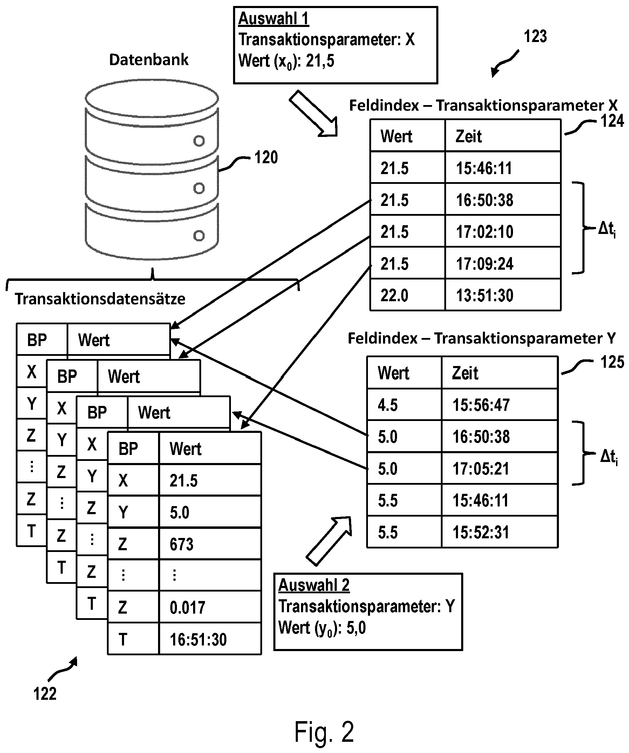

Figur 2 zeigt ein schematisches Diagramm einer exemplarischen Transaktionsdatenanalyse zum Erkennen missbräuchlicher Zahlungstransaktionen. In ein oder mehreren Datenbanken 120 sind Transaktionsdaten 122 in Form von Transaktionsdatensätzen gespeichert. Diese Transaktionsdatensätze umfassen Werte zu einer Mehrzahl von Transaktionsparametern X, Y, Z zu Zahlungstransaktionen. Ferner umfassen die Transaktionsdatensätze jeweils eine den entsprechenden Zahlungstransaktionen zugeordnete Zeitangabe T. Ferner wird beispielsweise eine normalisierte Indexstruktur 123 bereitgestellt. Diese Indexstruktur 123 führt die in den Transaktionsdatensätzen der Transaktionsdaten 122 für die Transaktionsparameter gespeicherten Werte auf. Beispielsweise umfasst die Indexstruktur 123 eine Mehrzahl von Teilindizes 124, 125. Die Teilindizes 124, 125 umfassen beispielsweise jeweils die erfassten Werte für einen der Transaktionsparameter. Beispielsweise erfasst ein erster Teilindex 124 die Werte des Transaktionsparameters X, d.h. stellt einen Feldindex für den Transaktionsparameter X bereit. Beispielsweise erfasst ein zweiter Teilindex 125 die Werte des Transaktionsparameters Y, d.h. stellt einen Feldindex für den Transaktionsparameter Y bereit. Die Indexstruktur 123 kann beispielsweise weitere (nicht dargestellte) Teilindizes für die weiteren Transaktionsparameter Z der Transaktionsdaten 122 umfassen. Beispielsweise umfassen die Teilindizes 124, 125 zudem jeweils eine den entsprechenden Werten zugeordnete Zeitangabe. Bei dieser Zeitangabe handelt es sich beispielsweise jeweils um die Zeitangabe T, welche der den entsprechenden Wert umfassenden Zahlungstransaktion zugeordnet ist.

Soll nun ein Unterschied einer Wahrscheinlichkeit eines Auftretens für Werte zweier Transaktionsparameter, beispielsweise X und Y, bestimmt werden, werden für jeden dieser Transaktionsparameter jeweils Werte ausgewählt. Beispielsweise wird für den ersten Transaktionsparameter X ein erster Wert $x_0$ ausgewählt, z.B. 21,5, und für den zweiten Transaktionsparameter Y ein zweiter Wert $y_0$, z.B. 5,0. Für diese ausgewählten Werte wird ein Unterschied in der Wahrscheinlichkeit eines Auftretens innerhalb eines bestimmten Zeitintervalls $\Delta t_i$ bestimmt. Hierzu wird in den Transaktionsdaten 122 unter Verwendung der Indexstruktur 123 geprüft, in welchen Transaktionsdatensätzen aus dem Zeitintervall $\Delta t_i$ die entsprechenden Werte vorkommen.

Beispielsweise wird der entsprechende Unterschied in der Wahrscheinlichkeit eines Auftretens des ersten Werts $x_0$ des ersten Transaktionsparameters X und des zweiten Werts $y_0$ des zweiten Transaktionsparameters Y innerhalb der Transaktionsdatensätze des Zeitintervalls $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren, d.h. über dritte Transaktionsparameter Z und deren Werte, d.h. über alle dritten Werte z, welche für die entsprechenden weiteren Transaktionsparameter Z innerhalb der Transaktionsdatensätze der Datenbank 120 protokolliert sind. V(Z) ist die Menge aller protokollierter dritter Werte z der dritten Transaktionsparameter Z. Der Faktor ½ dient der Normalisierung, um sicherzustellen, dass die Wahrscheinlichkeitsdifferenz zwischen 0 und 1 liegt. Beispielsweise können für den Faktor auch andere Werte verwendet werden.

Eine Wahrscheinlichkeit eines Auftretens eines bestimmten dritten Werts z aus der Menge der dritten Werte eines weiteren dritten Transaktionsparameters Z aus der Menge der dritten Transaktionsparameter, über welche summiert wird, in Kombination mit dem ersten Wert $x_0$ des ersten Transaktionsparameters X ist definiert als

$$p_{Z|X=x_0}(z) = \frac{\left|I_Z(z) \cap I_X^{\Delta t_i}(x_0)\right|}{\left|I_X^{\Delta t_i}(x_0)\right|}.$$

$I_X^{\Delta t_i}(x_0)$ ist die Menge der Transaktionsdatensätze des entsprechenden vordefinierten Zeitintervalls $\Delta t_i$, welche den ersten Wert $x_0$ für den ersten Transaktionsparameter X umfassen. $I_Z(z)$ ist die Menge der Transaktionsdatensätze der Datenbank, welche den dritten Wert z für den weiteren dritten Transaktionsparameter Z umfassen. Die Schnittmenge $I_Z(z) \cap I_X^{\Delta t_i}(x_0)$ ist somit die Menge aller Transaktionsdatensätze des vordefinierten Zeitintervalls $\Delta t_i$, welche sowohl den bestimmten dritten Wert z des weiteren dritten Transaktionsparameters Z, als auch den ersten Wert $x_0$ des ersten Transaktionsparameters X umfassen.

Eine Wahrscheinlichkeit eines Auftretens eines bestimmten dritten Werts z aus der Menge der dritten Werte eines weiteren dritten Transaktionsparameters Z aus der Menge der dritten Transaktionsparameter, über welche summiert wird, in Kombination mit dem zweiten Wert $y_0$ des zweiten Transaktionsparameters Y ist definiert als

$$p_{Z|Y=y_0}(z) = \frac{\left|I_Z(z) \cap I_Y^{\Delta t_i}(y_0)\right|}{\left|I_Y^{\Delta t_i}(y_0)\right|}.$$

$I_Y^{\Delta t_i}(y_0)$ ist die Menge der Transaktionsdatensätze des entsprechenden vordefinierten Zeitintervalls $\Delta t_i$ ist, welche den zweiten Wert $y_0$ für den zweiten Transaktionsparameter Y umfassen. Die Schnittmenge $I_Z(z) \cap I_Y^{\Delta t_i}(y_0)$ ist somit die Menge aller Transaktionsdatensätze des vordefinierten Zeitintervalls $\Delta t_i$, welche sowohl den bestimmten dritten Wert z des weiteren dritten Transaktionsparameters Z, als auch den zweiten Wert $y_0$ des zweiten Transaktionsparameters Y umfassen.

Beispielsweise ist der Unterschied in der Wahrscheinlichkeit des Auftretens des ersten Werts $x_0$ des ersten Transaktionsparameters X des Wertepaars und des zweiten Werts $y_0$ des zweiten Transaktionsparameters Y des Wertepaars innerhalb der Transaktionsdatensätze des Zeitintervalls $\Delta t_i$ definiert als ein redundanzfreier Unterschied der Form:

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|.$$

Eine Wahrscheinlichkeit eines Auftretens eines bestimmten dritten Werts z eines weiteren dritten Transaktionsparameters Z aus der Menge der dritten Transaktionsparameter, über welche summiert wird, in Kombination mit dem ersten Wert $x_0$ des ersten Transaktionsparameters X sowie dem zweiten Wert $y_0$ des zweiten Transaktionsparameters Y ist definiert als

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

$I_X^{\triangle t_i}(x_0)$ ist die Menge der Transaktionsdatensätze des entsprechenden vordefinierten Zeitintervalls $\Delta t_i$, welche den ersten Wert $x_0$ für den ersten Transaktionsparameter X umfassen. $I_Y^{\triangle t_i}(y_0)$ ist die Menge der Transaktionsdatensätze des entsprechenden vordefinierten Zeitintervalls $\Delta t_i$ ist, welche den zweiten Wert $y_0$ für den zweiten Transaktionsparameter Y umfassen. $I_Z(z)$ ist die Menge der Transaktionsdatensätze der Datenbank, welche den dritten Wert z für den weiteren dritten Transaktionsparameter Z umfassen. Die Schnittmenge $I_Z(z) \cap I_X^{\triangle t_i}(x_0) \cap I_Y^{\triangle t_i}(y_0)$ ist somit die Menge aller Transaktionsdatensätze des vordefinierten Zeitintervalls $\Delta t_i$, welche sowohl den bestimmten dritten Wert z des weiteren dritten Transaktionsparameters Z, als auch den ersten Wert $x_0$ des ersten Transaktionsparameters X und den zweiten Wert $y_0$ des zweiten Transaktionsparameters Y umfassen.

Basierend auf der Indexabfrage der Indexstruktur 123 kann die Anzahl der Transaktionsdatensätze innerhalb des Zeitintervalls $\Delta t_i$ bestimmt werde, welche Feld x mit dem Wert 21,5 und Feld y mit dem Wert 5,0 umfassen. Basierend darauf kann die Wahrscheinlichkeit für ein Auftreten der entsprechenden Werte sowie der Unterschied der Wahrscheinlichkeiten bestimmt werden.

Nach Ausführungsformen kann es sich bei den vorgenannten Wahrscheinlichkeiten für ein Auftreten von Werten von Transaktionsparametern in den Transaktionsdatensätzen beispielsweise um Wahrscheinlichkeiten für ein Auftreten von bestimmten diskreten Werten handeln. Beispielsweise umfasst ein Transaktionsdatensatz einen Wert $x_0$ für einen Transaktionsparameter X, wenn der entsprechende Transaktionsdatensatz den diskreten Wert $x_0$ für den Transaktionsparameter X identisch umfasst. Beispielsweise umfasst ein Transaktionsdatensatz einen Wert $y_0$ für einen Transaktionsparameter Y, wenn der entsprechende Transaktionsdatensatz den diskreten Wert $y_0$ für den Transaktionsparameter Y identisch umfasst. Beispielsweise umfasst ein Transaktionsdatensatz einen Wert z für einen Transaktionsparameter Z, wenn der entsprechende Transaktionsdatensatz den diskreten Wert z für den Transaktionsparameter Z identisch umfasst.

Nach Ausführungsformen kann es sich bei den vorgenannten Wahrscheinlichkeiten für ein Auftreten von Werten von Transaktionsparametern in den Transaktionsdatensätzen beispielsweise um Wahrscheinlichkeiten für ein Auftreten von Werten aus bestimmten Werteintervallen handeln. Beispielsweise steht der Wert $x_0$ stellvertretend für ein den Wert $x_0$ umfassendes Werteintervall, etwa ein Werteintervall $(x_1, x_2)$ von $x_1$ bis $x_2$ mit $x_0$ G $(x_1, x_2)$. Beispielsweise umfasst ein Transaktionsdatensatz in diesem Fall einen Wert $x_0$ für einen Transaktionsparameter X, wenn der entsprechende Transaktionsdatensatz irgendeinen Wert $x_i$ E $(x_1, x_2)$ für den Transaktionsparameter X umfasst. Beispielsweise steht der Wert $y_0$ stellvertretend für ein den Wert $y_0$ umfassendes Werteintervall, etwa ein Werteintervall $(y_1, y_2)$ von $y_1$ bis $y_2$ mit $y_0$ E $(y_1, y_2)$. Beispielsweise umfasst ein Transaktionsdatensatz in diesem Fall einen Wert $y_0$ für einen Transaktionsparameter Y, wenn der entsprechende Transaktionsdatensatz irgendeinen Wert $y_i \in (y_1, y_2)$ für den Transaktionsparameter Y umfasst. Beispielsweise steht der Wert z stellvertretend für ein den Wert z umfassendes Werteintervall, etwa ein Werteintervall $(z_1, z_2)$ von $z_1$ bis $z_2$ mit $z \in (z_1, z_2)$. Beispielsweise umfasst ein Transaktionsdatensatz in diesem Fall einen Wert z für einen Transaktionsparameter Z, wenn der entsprechende Transaktionsdatensatz irgendeinen Wert $z_i \in (z_1, z_2)$ für den Transaktionsparameter Z umfasst.

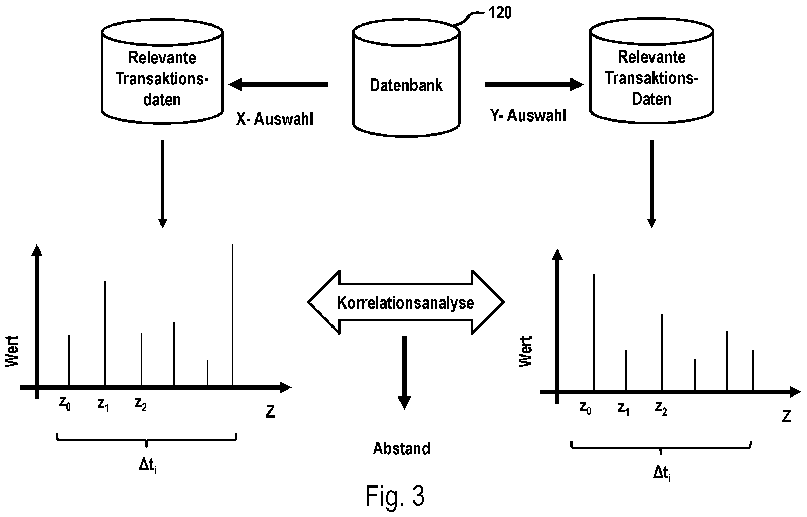

Figur 3 zeigt eine weitere schematische Darstellung der exemplarischen Transaktionsdatenanalyse aus Figur 2. Aus den ein oder mehreren Datenbanken 120 werden die relevanten Transaktionsdaten für die X-Auswahl, d.h. diejenigen Transaktionsdatensätze aus dem Zeitintervall $\Delta t_i$, die den Wert $x_0$ für den Transaktionsparameter X umfassen, extrahiert. Diese Transaktionsdatensätze umfassen beispielsweise die dargestellten Werte $z_0$, $z_1$, $z_2$, etc. für die weiteren Transaktionsparameter Z. Ferner werden aus den ein oder mehreren Datenbanken 120 die relevanten Transaktionsdaten für die Y-Auswahl, d.h. diejenigen Transaktionsdatensätze aus dem Zeitintervall $\Delta t_i$, die den Wert $y_0$ für den Transaktionsparameter Y umfassen, extrahiert. Diese Transaktionsdatensätze umfassen beispielsweise die dargestellten Werte $z_0$, $z_1$, $z_2$, etc. für die weiteren Transaktionsparameter Z. Unter Verwendung der jeweiligen Werte $z_0$, $z_1$, $z_2$, etc. für die weiteren Transaktionsparameter Z wird eine Korrelationsanalyse vorgenommen. Das Ergebnis dieser Korrelationsanalyse ist ein Grad der Korrelation zwischen den beiden Werten $x_0$ und $y_0$ für die beiden Transaktionsparameter X und Y. Der Grad der Korrelation wird auch als Abstand bezeichnet. Hierbei handelt es sich um den oben beschriebenen Unterschied in der Wahrscheinlichkeit eines Auftretens der beiden Werten $x_0$ und $y_0$ für die beiden Transaktionsparameter X und Y in den Transaktionsdatensätzen des Zeitintervalls $\Delta t_i$. Je geringer der Unterschied, desto größer die Korrelation. Desto größer der Unterschied, desto geringer die Korrelation. Zunächst werden im Zuge einer Anomalieanalyse beispielsweise diejenigen Transaktionsparameter identifiziert, etwa die beiden Transaktionsparameter X und Y, deren Unterschied eine Anomalie in einem missbräuchliche Zahlungstransaktionen umfassenden vordefinierten Zeitintervall aufweist. Eine Anomalie liegt vor, wenn die für das die missbräuchlichen Zahlungstransaktionen umfassende vordefinierte Zeitintervall bestimmte Korrelation signifikant von einer Referenzkorrelation eines Referenzzeitintervalls $\Delta t_j$ abweicht, d.h. der Unterschied größer oder gleich einem vordefinierten Größenwert ist.

Diese identifizierten Transaktionsparameter X und Y werden dann im Zuge einer Überwachung der protokollierten Werte, wie in Figur 3 gezeigt, auf ihre Korrelation hin geprüft. Weicht die für das überwachte Zeitintervall $\Delta t_i$ bestimmte Korrelation signifikant von einer Referenzkorrelation eines Referenzzeitintervalls $\Delta t_j$ ab, d.h. ist der Unterschied größer oder gleich einem vordefinierten Größenwert, stellt dies ein Indiz für ein Auftreten der entsprechenden missbräuchlichen Zahlungstransaktionen dar.

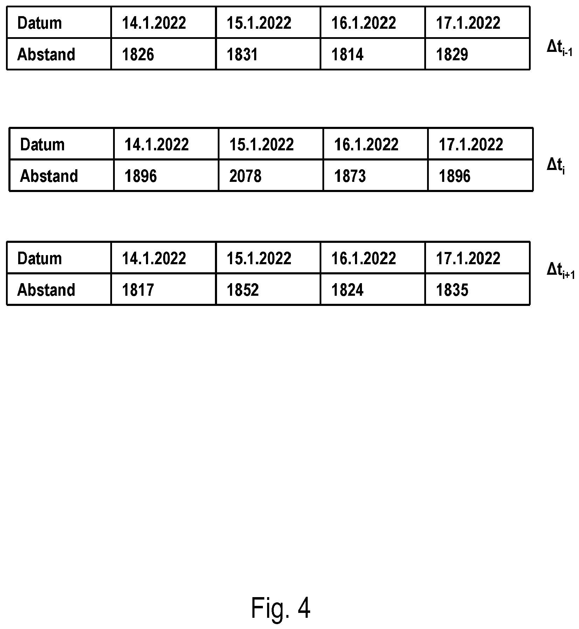

Figur 4 zeigt exemplarische Abstände der beiden Werten $x_0$ und $y_0$ für die beiden Transaktionsparameter X und Y aus Figur 2 im Zuge einer Transaktionsdatenanalyse zum Erkennen missbräuchlicher Zahlungstransaktionen. Es werden exemplarisch für unterschiedliche Zeitintervalle $\Delta t_{i-1}$, $\Delta t_i$, $\Delta t_{i+1}$, an vier unterschiedlichen Tagen, z.B. "14.1.2022", "15.1.2022", "16.1.2022", "17.1.2022", die jeweiligen Abstände zwischen den Werten $x_0$ und $y_0$ für die beiden Transaktionsparameter X und Y dargestellt. Die Abstände sind in diesem Fall nicht normiert, d.h. liegen nicht im Intervall von 0 bis 1. Der Abstand zwischen den Werten $x_0$ und $y_0$ für die beiden Transaktionsparameter X und Y für das Zeitintervall $\Delta t_i$ am 15.1.2022 unterscheidet sich deutlich von den anderen Abständen. Mithin liegt hier eine Anomalie vor. Beispielsweise sind innerhalb des Zeitintervalls $\Delta t_i$ missbräuchliche Zahlungstransaktionen aufgetreten. Somit kann ein Auftreten einer Anomalie, wie der in Figur 4 für das Zeitintervall $\Delta t_i$ am 15.1.2022 gezeigten Anomalie, als ein Indiz für ein Auftreten der entsprechenden missbräuchlichen Zahlungstransaktionen verwendet werden. Wird eine entsprechende Anomalie erfasst, wird ein Auftreten der entsprechenden missbräuchlichen Zahlungstransaktionen erkannt.

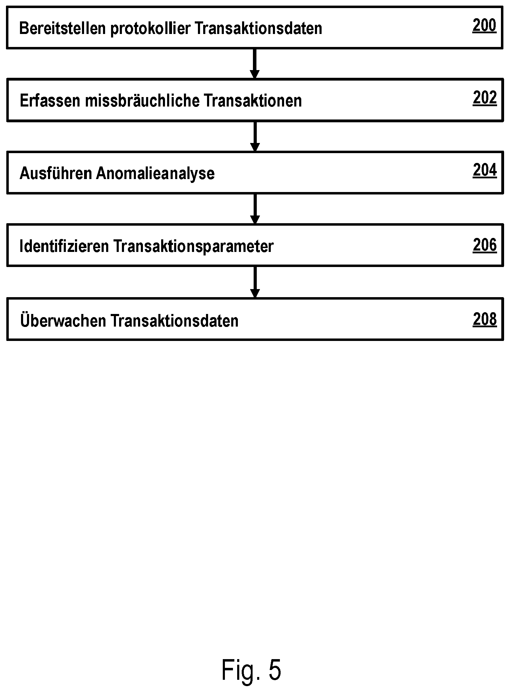

Figur 5 zeigt ein exemplarisches Verfahren zum Analysieren von Transaktionsdaten. In Block 200 werden protokollierte Transaktionsdaten bereitgestellt. Beispielsweise werden die entsprechenden Transaktionsdaten bzw. die entsprechenden Transaktionsdaten umfassende Transaktionsdatensätzen in ein oder mehreren Datenbanken gespeichert und Zugriff auf die entsprechenden ein oder mehreren Datenbanken gewährt. Die gespeicherten Transaktionsdatensätze umfassen Werte zu einer Mehrzahl von Transaktionsparametern von Zahlungstransaktionen. Ferner umfassen die Transaktionsdaten jeweils einen Zeitstempel. In Block 202 werden missbräuchliche Zahlungstransaktionen erfasst und in Block 204 eine Anomalieanalyse ausgeführt. Die Anomalieanalyse umfasst ein Bestimmen von ein oder mehreren Anomalien innerhalb erster Transaktionsdatensätze der protokollierten Transaktionsdatensätze, deren protokollierten Werten Zeitstempel von einem vordefinierten ersten Zeitintervall umfasst werden. Die Anomalien sind dabei jeweils eine Kombination von Werten von Transaktionsparametern zu Zahlungstransaktionen, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdatensätze unterscheidet, deren Werte in einem vordefinierten zweiten Zeitintervall erfasst wurden bzw. deren Zeitstemple von dem entsprechenden vordefinierten zweiten Zeitintervall umfasst werden. In Block 206 werden diejenigen Transaktionsparameter des Computersystems identifiziert, deren Werte von den bestimmten ein oder mehreren Anomalien umfasst sind. Ferner wird beispielsweise eine Zuordnung der identifizierten Transaktionsparameter zu den in Block 202 erfassten missbräuchlichen Zahlungstransaktionen erstellt. Diese Zuordnung wird beispielsweise für eine Überwachung zukünftig protokollierter Transaktionsdatensätze gespeichert. In Block 208 werden die für die identifizierten Transaktionsparameter in den Transaktionsdatensätzen protokollierten Werte überwacht. Bei den überwachten Transaktionsdatensätzen handelt es sich beispielsweise um Transaktionsdatensätze neu protokollierter Transaktionsdaten, d.h. von Transaktionsdaten, welche beispielsweise nach dem Ausführen der Blöcke 200 bis 206 protokolliert werden.

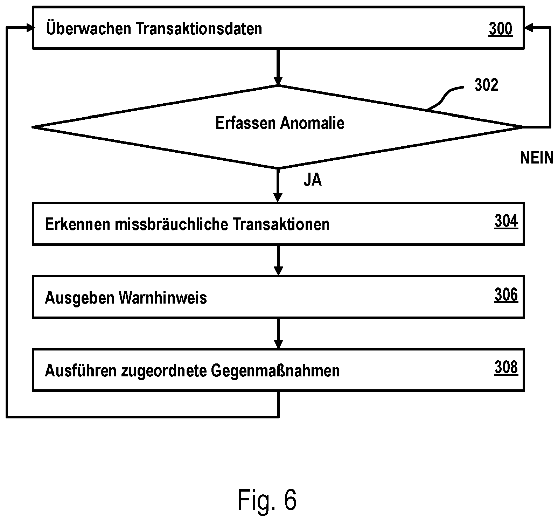

Figur 6 zeigt ein exemplarisches Verfahren zum Erkennen missbräuchlicher Zahlungstransaktionen unter Verwendung von Transaktionsparametern, welche beispielsweise wie in dem in Figur 5 gezeigten Verfahren identifiziert wurden. Beispielsweise wird eine entsprechende Zuordnung der identifizierten Transaktionsparameter zu missbräuchlichen Zahlungstransaktionen verwendet. In Block 300 werden protokollierte Transaktionsdaten überwacht. Dabei werden die für die identifizierten Transaktionsparameter in den Transaktionsdatensätzen protokollierten Werte überwacht und geprüft, ob eine Anomalie erfasst wird. Eine Anomalie wird erfasst, falls Werte für die identifizierten Transaktionsparameter der Zahlungstransaktionen innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Transaktionsdatensätzen der protokollierten Transaktionsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet. Wird keine Anomalie für die identifizierten Transaktionsparameter erfasst, wird die Überwachung der Transaktionsdaten in Block 300 unverändert fortgesetzt. Wird eine Anomalie für die identifizierten Transaktionsparameter erfasst, wird das Verfahren in Block 304 fortgesetzt. In Block 304 werden missbräuchliche Zahlungstransaktionen erkannt, welche den identifizierten Transaktionsparametern zugeordnet ist. In Block 306 wird beispielsweise ein Warnhinweis über erkannten missbräuchlichen Zahlungstransaktionen ausgegeben. In Block 308 werden beispielsweise hinterlegte Gegenmaßnahmen ausgeführt, welche ebenfalls der charakteristischen Merkmalskombination und/oder den entsprechenden missbräuchlichen Zahlungstransaktionen zugeordnet sind. Die entsprechenden Gegenmaßnahmen umfassen beispielsweise ein Blockieren einer oder mehrerer der als missbräuchlich erkannten Zahlungstransaktionen, ein Sperren ein oder mehrerer Zielkonten der als missbräuchlich erkannten Zahlungstransaktionen, ein Sperren ein oder mehrerer Ausgangskonten der als missbräuchlich erkannten Zahlungstransaktionen, ein Sperren ein oder mehrerer zur Abwicklung der als missbräuchlich erkannten Zahlungstransaktionen verwendeten Zahlungsmittel, und/oder ein Rückabwickeln einer oder mehrerer der als missbräuchlich erkannten Zahlungstransaktionen.

**Bezugszeichenliste**

| | |
|---|---|
| 100 | Computersystem |
| 102 | Prozessor |
| 104 | Programminstruktionen |
| 106 | Speicher |
| 108 | Zuordnung |
| 110 | missbräuchliche Transaktionen |
| 112 | Transaktionsparameter |
| 114 | Gegenmaßnahmen |
| 116 | Sensor |
| 118 | Kommunikationsschnittstelle |
| 120 | Datenbank |
| 122 | Transaktionsdaten |
| 123 | Indexstruktur |
| 124 | Teilindex |
| 125 | Teilindex |

**Patentansprüche**

1. Verfahren zum Erkennen missbräuchlicher Zahlungstransaktionen (110) unter Verwendung von protokollierten Transaktionsdaten (122) zu Zahlungstransaktionen, wobei das Verfahren umfasst:

   • Bereitstellen von protokollierten Transaktionsdaten (122) zu Zahlungstransaktionen, wobei das Protokollieren der Transaktionsdaten (122) ein Speichern von Transaktionsdatensätzen in ein oder mehreren Datenbanken (120) umfasst, wobei die Transaktionsdatensätze Werte zu einer Mehrzahl von Transaktionsparametern der protokollierten Zahlungstransaktionen umfassen, wobei die Transaktionsdaten (122) ferner jeweils einen Zeitstempel umfassen,
   • auf ein Auftreten missbräuchlicher Zahlungstransaktionen (110) hin, Ausführen einer Anomalieanalyse, wobei die Anomalieanalyse ein Bestimmen von ein oder mehreren Anomalien innerhalb erster Transaktionsdatensätze der gespeicherten Transaktionsdatensätze umfasst, deren protokollierte Werte innerhalb eines zumindest einen Teil der die missbräuchlichen Zahlungstransaktionen (110) umfassenden vordefinierten ersten Zeitintervalls erfasst wurden, wobei die Anomalien jeweils eine Kombination von Werten von Transaktionsparametern der protokollierten Transaktionsdaten (122) sind, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdatensätze unterscheidet, deren Werte in einem vordefinierten zweiten Zeitintervall erfasst wurden, welches keine missbräuchlichen Zahlungstransaktionen (110) umfasst,

• Identifizieren derjenigen Transaktionsparameter (112), deren Werte von den bestimmten ein oder mehreren Anomalien umfasst sind,

• Überwachen der für die identifizierten Transaktionsparameter (112) in den Transaktionsdatensätzen protokollierten Werte, wobei das Überwachen ein Erkennen eines Auftretens der missbräuchlichen Zahlungstransaktionen (110) umfasst auf ein Erfassen von Werten für die identifizierten Transaktionsparameter (112) innerhalb eines vordefinierten dritten Zeitintervalls, für welche sich ein dritter Unterschied in einer dritten Wahrscheinlichkeit eines Auftretens der entsprechenden Werte innerhalb von dritten Transaktionsdatensätzen der protokollierten Transaktionsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

2. Verfahren nach Anspruch 1, wobei es sich bei den Kombinationen von Werten jeweils um Wertepaare handelt.

3. Verfahren nach Anspruch 2, wobei der Unterschied in der Wahrscheinlichkeit eines Auftretens eines ersten Werts $x_0$ eines ersten Transaktionsparameters X eines Wertepaars und eines zweiten Werts $y_0$ eines zweiten Transaktionsparameters Y des Wertepaars innerhalb der Transaktionsdatensätze eines der vordefinierten Zeitintervalle $\Delta t_i$ definiert ist als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|,$$

wobei die Summation über alle weiteren dritten Transaktionsparameter Z und alle dritten Werte z läuft, welche für den weiteren dritten Transaktionsparameter Z innerhalb der Transaktionsdatensätze der ein oder mehreren Datenbanken (120) protokolliert sind,

wobei eine Wahrscheinlichkeit eines Auftretens eines dritten Werts z eines weiteren dritten Transaktionsparameters Z in Kombination mit dem ersten Wert $x_0$ des ersten Transaktionsparameters X definiert ist als

$$p_{Z|X=x_0}(z) = \frac{\left|I_Z(z) \cap I_X^{\Delta t_i}(x_0)\right|}{\left|I_X^{\Delta t_i}(x_0)\right|},$$

wobei $I_X^{\Delta t_i}(x_0)$ die Menge der Transaktionsdatensätze des entsprechenden vordefinierten Zeitintervalls $\Delta t_i$ ist, welche den ersten Wert $x_0$ für den ersten Transaktionsparameter X umfassen, wobei $I_Z(z)$ die Menge der Transaktionsdatensätze der ein oder mehreren Datenbanken (120) ist, welche den dritten Wert z für den weiteren dritten Transaktionsparameter Z umfassen,

wobei eine Wahrscheinlichkeit eines Auftretens eines dritten Werts z eines weiteren dritten Transaktionsparameters Z in Kombination mit dem zweiten Wert $y_0$ des zweiten Transaktionsparameters Y definiert ist als

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

wobei $I_Y^{\Delta t_i}(y_0)$ die Menge der Transaktionsdatensätze des entsprechenden vordefinierten Zeitintervalls $\Delta t_i$ ist, welche den zweiten Wert $y_0$ für den erste Transaktionsparameter Y umfassen.

4. Verfahren nach Anspruch 2, wobei der Unterschied in der Wahrscheinlichkeit des Auftretens des ersten Werts $x_0$ des ersten Transaktionsparameters X des Wertepaars und des zweiten Werts $y_0$ des zweiten Transaktionspara-

meters Y des Wertepaars innerhalb der Transaktionsdatensätze eines der vordefinierten Zeitintervalle $\Delta t_i$ definiert ist als ein redundanzfreier Unterschied der Form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

wobei

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|$$

und

$$\frac{1}{2}\left\|p_{Z|X=x_0 \wedge Y=y_0} - p_{Z|Y=y_0}\right\|_1 = \frac{1}{2} \cdot \sum_Z \sum_{z \in V(Z)} \left|p_{Z|X=x_0 \wedge Y=y_0}(z) - p_{Z|Y=y_0}(z)\right|,$$

wobei

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

5. Verfahren nach einem der vorangehenden Ansprüche, wobei auf das Erkennen der missbräuchlichen Zahlungstransaktionen (110) hin ein Warnhinweis ausgegeben wird.

6. Verfahren nach einem der vorangehenden Ansprüche, wobei auszuführende Gegenmaßnahmen (114) gegen die missbräuchlichen Zahlungstransaktionen (110) festgelegt werden, wobei auf das Erkennen der missbräuchlichen Zahlungstransaktionen (110) hin automatisch die festgelegten Gegenmaßnahmen (114) ausgeführt werden.

7. Verfahren nach Anspruch 6, wobei die Gegenmaßnahmen (114) eine oder mehrere der folgenden Maßnahmen umfassen: Blockieren einer oder mehrerer der als missbräuchlich erkannten Zahlungstransaktionen, Sperren ein oder mehrerer Zielkonten der als missbräuchlich erkannten Zahlungstransaktionen, Sperren ein oder mehrerer Ausgangskonten der als missbräuchlich erkannten Zahlungstransaktionen, Sperren ein oder mehrerer zur Abwicklung der als missbräuchlich erkannten Zahlungstransaktionen verwendeten Zahlungsmittel, Rückabwickeln einer oder mehrerer der als missbräuchlich erkannten Zahlungstransaktionen.

8. Verfahren nach einem der vorangehenden Ansprüche, wobei das Erkennen der missbräuchlichen Zahlungstransaktionen (110) auf ein Erfassen der Werte für eine vorbestimmte Mindestanzahl von Transaktionsparametern der identifizierten Transaktionsparameter (112) innerhalb des vordefinierten dritten Zeitintervalls erfolgt, für welche sich der dritte Unterschied in der dritten Wahrscheinlichkeit des Auftretens der entsprechenden Werte innerhalb der dritten Transaktionsdatensätzen mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

9. Verfahren nach Anspruch 8, wobei das Erkennen der missbräuchlichen Zahlungstransaktionen (110) auf ein Erfassen der Werte für alle identifizierten Transaktionsparameter (112) innerhalb des vordefinierten dritten Zeitintervalls erfolgt, für welche sich der dritte Unterschied in der dritten Wahrscheinlichkeit des Auftretens der entsprechenden Werte innerhalb der dritten Transaktionsdatensätzen mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

10. Verfahren nach einem der vorangehenden Ansprüche, wobei es sich bei dem vordefinierten Größenwert um einen positiven Größenwert, einen negativen Größenwert oder um den Betrag des Unterschieds zwischen den beiden entsprechenden Unterschieden in den Wahrscheinlichkeiten des Auftretens der entsprechenden Werte handelt, und/oder
wobei es sich bei dem vordefinierten Größenwert um einen prozentualen Größenwert oder einen absoluten Größenwert handelt.

11. Verfahren nach einen der vorangehenden Ansprüche, wobei das Speichern der Transaktionsdatensätze ein Erstellen und Speichern eines normalisierten Index (123, 124, 125) der von den Transaktionsdatensätzen umfassten Werte für die Transaktionsparameter umfasst, wobei die Anomalieanalyse unter Verwendung des normalisierten Indexes (123, 124, 125) ausgeführt wird.

12. Computersystem (100) mit einem Prozessor (102) und einem Speicher (106), wobei in dem Speicher (106) Programminstruktionen (104) gespeichert sind, wobei ein Ausführen der Programminstruktionen (104) durch den Prozessor (102) den Prozessor (102) dazu veranlasst das Computersystem (100) so zu steuern, dass das Computersystem (100) ein Verfahren zum Erkennen missbräuchlicher Zahlungstransaktionen (110) unter Verwendung von protokollierten Transaktionsdaten (122) zu Zahlungstransaktionen ausführt, wobei das Verfahren umfasst:

- Bereitstellen von protokollierten Transaktionsdaten (122) zu Zahlungstransaktionen, wobei das Protokollieren der Transaktionsdaten (122) ein Speichern von Transaktionsdatensätzen in ein oder mehreren Datenbanken (120) umfasst, wobei die Transaktionsdatensätze Werte zu einer Mehrzahl von Transaktionsparametern der protokollierten Zahlungstransaktionen umfassen, wobei die Transaktionsdaten (122) ferner jeweils einen Zeitstempel umfassen,
- auf ein Auftreten missbräuchlicher Zahlungstransaktionen (110) hin, Ausführen einer Anomalieanalyse, wobei die Anomalieanalyse ein Bestimmen von ein oder mehreren Anomalien innerhalb erster Transaktionsdatensätze der gespeicherten Transaktionsdatensätze umfasst, deren protokollierte Werte innerhalb eines zumindest einen Teil der die missbräuchlichen Zahlungstransaktionen (110) umfassenden vordefinierten ersten Zeitintervalls erfasst wurden, wobei die Anomalien jeweils eine Kombination von Werten von Transaktionsparametern der protokollierten Transaktionsdaten (122) sind, für welche sich ein erster Unterschied in einer ersten Wahrscheinlichkeit eines Auftretens der entsprechenden Werte innerhalb der ersten Transaktionsdatensätze mindestens um einen vordefinierten Größenwert von einem zweiten Unterschied in einer zweiten Wahrscheinlichkeit eines Auftretens der entsprechenden Werte innerhalb von zweiten Transaktionsdatensätze der protokollierten Transaktionsdatensätze unterscheidet, deren Werte in einem vordefinierten zweiten Zeitintervall erfasst wurden, welches keine missbräuchlichen Zahlungstransaktionen (110) umfasst,
- Identifizieren derjenigen Transaktionsparameter (112), deren Werte von den bestimmten ein oder mehreren Anomalien umfasst sind,
- Überwachen der für die identifizierten Transaktionsparameter (112) in den Transaktionsdatensätzen protokollierten Werte, wobei das Überwachen ein Erkennen eines Auftretens der missbräuchlichen Zahlungstransaktionen (110) umfasst auf ein Erfassen von Werten für die identifizierten Transaktionsparameter (112) innerhalb eines vordefinierten dritten Zeitintervalls, für welche sich ein dritter Unterschied in einer dritten Wahrscheinlichkeit eines Auftretens der entsprechenden Werte innerhalb von dritten Transaktionsdatensätzen der protokollierten Transaktionsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Transaktionsdatensätze unterscheidet.

13. Computersystem (100) nach Anspruch 12, wobei es sich bei den Kombinationen von Werten jeweils um Wertepaare handelt.

14. Computersystem (100) nach Anspruch 13, wobei der Unterschied in der Wahrscheinlichkeit eines Auftretens eines ersten Werts $x_0$ eines ersten Transaktionsparameters X eines Wertepaars und eines zweiten Werts $y_0$ eines zweiten Transaktionsparameters Y des Wertepaars innerhalb der Transaktionsdatensätze eines der vordefinierten Zeitintervalle $\Delta t_i$ definiert ist als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|,$$

wobei die Summation über alle weiteren dritten Transaktionsparameter Z und alle dritten Werte z läuft, welche für den weiteren dritten Transaktionsparameter Z innerhalb der Transaktionsdatensätze der ein oder mehreren Datenbanken (120) protokolliert sind,

wobei eine Wahrscheinlichkeit eines Auftretens eines dritten Werts z eines weiteren dritten Transaktionsparameters Z in Kombination mit dem ersten Wert $x_0$ des ersten Transaktionsparameters X definiert ist als

$$p_{Z|X=x_0}(z) = \frac{\left|I_Z(z) \cap I_X^{\triangle t_i}(x_0)\right|}{\left|I_X^{\triangle t_i}(x_0)\right|},$$

wobei $I_X^{\triangle t_i}(x_0)$ die Menge der Transaktionsdatensätze des entsprechenden vordefinierten Zeitintervalls $\triangle t_i$ ist, welche den ersten Wert $x_0$ für den ersten Transaktionsparameter X umfassen, wobei $I_Z(z)$ die Menge der Transaktionsdatensätze der ein oder mehreren Datenbanken (120) ist, welche den dritten Wert z für den weiteren dritten Transaktionsparameter Z umfassen,

wobei eine Wahrscheinlichkeit eines Auftretens eines dritten Werts z eines weiteren dritten Transaktionsparameters Z in Kombination mit dem zweiten Wert $y_0$ des zweiten Transaktionsparameters Y definiert ist als

$$p_{Z|Y=y_0}(z) = \frac{\left|I_Z(z) \cap I_Y^{\triangle t_i}(y_0)\right|}{\left|I_Y^{\triangle t_i}(y_0)\right|},$$

wobei $I_Y^{\triangle t_i}(y_0)$ die Menge der Transaktionsdatensätze des entsprechenden vordefinierten Zeitintervalls $\triangle t_i$ ist, welche den zweiten Wert $y_0$ für den erste Transaktionsparameter Y umfassen.

15. Computersystem (100) nach Anspruch 13, wobei der Unterschied in der Wahrscheinlichkeit des Auftretens des ersten Werts $x_0$ des ersten Transaktionsparameters X des Wertepaars und des zweiten Werts $y_0$ des zweiten Transaktionsparameters Y des Wertepaars innerhalb der Transaktionsdatensätze eines der vordefinierten Zeitintervalle $\triangle t_i$ definiert ist als ein redundanzfreier Unterschied der Form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

wobei

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|$$

und

$$\frac{1}{2}\left\|p_{Z|X=x_0 \wedge Y=y_0} - p_{Z|Y=y_0}\right\|_1 = \frac{1}{2} \cdot \sum_Z \sum_{z \in V(Z)} \left|p_{Z|X=x_0 \wedge Y=y_0}(z) - p_{Z|Y=y_0}(z)\right|,$$

wobei

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

Fig. 1

Fig. 2

Fig. 3

| Datum | 14.1.2022 | 15.1.2022 | 16.1.2022 | 17.1.2022 |
|---|---|---|---|---|
| Abstand | 1826 | 1831 | 1814 | 1829 |

$\Delta t_{i-1}$

| Datum | 14.1.2022 | 15.1.2022 | 16.1.2022 | 17.1.2022 |
|---|---|---|---|---|
| Abstand | 1896 | 2078 | 1873 | 1896 |

$\Delta t_i$

| Datum | 14.1.2022 | 15.1.2022 | 16.1.2022 | 17.1.2022 |
|---|---|---|---|---|
| Abstand | 1817 | 1852 | 1824 | 1835 |

$\Delta t_{i+1}$

Fig. 4

| Bereitstellen protokollier Transaktionsdaten | **200** |

| Erfassen missbräuchliche Transaktionen | **202** |

| Ausführen Anomalieanalyse | **204** |

| Identifizieren Transaktionsparameter | **206** |

| Überwachen Transaktionsdaten | **208** |

Fig. 5

Überwachen Transaktionsdaten     300

302

Erfassen Anomalie

NEIN

JA

Erkennen missbräuchliche Transaktionen    304

Ausgeben Warnhinweis    306

Ausführen zugeordnete Gegenmaßnahmen    308

Fig. 6

Europäisches
Patentamt

European
Patent Office

Office européen
des brevets

# EUROPÄISCHER RECHERCHENBERICHT

**Nummer der Anmeldung**

EP 23 20 1003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/114594 A1 (NUNES ERIC [US] ET AL) 14. April 2022 (2022-04-14) * Zusammenfassung; Abbildungen * * Absätze [0016] – [0023], [0057] – [0061], [0089] – [0109], [0133] * ----- | 1-15 | INV. G06Q20/40 |
| A | US 2020/151729 A1 (HAWKINS TAMMY LYNN [IE] ET AL) 14. Mai 2020 (2020-05-14) * Zusammenfassung; Abbildungen * ----- | 1-15 | |
| A | US 2011/251951 A1 (KOLKOWITZ DAN [US] ET AL) 13. Oktober 2011 (2011-10-13) * Zusammenfassung; Abbildungen * * Absätze [0027], [0051] * ----- | 1-15 | |
| A | WO 2022/008130 A1 (FEATURESPACE LTD [GB]) 13. Januar 2022 (2022-01-13) * Zusammenfassung; Abbildungen * * Absatz [0050] * ----- | 1-15 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 9. Januar 2024 | Breugelmans, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

# EP 4 345 723 A1

## ANHANG ZUM EUROPÄISCHEN RECHERCHENBERICHT
## ÜBER DIE EUROPÄISCHE PATENTANMELDUNG NR.

EP 23 20 1003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2024

| Im Recherchenbericht angeführtes Patentdokument | Datum der Veröffentlichung | Mitglied(er) der Patentfamilie | Datum der Veröffentlichung |
|---|---|---|---|
| US 2022114594 A1 | 14-04-2022 | KEINE | |
| US 2020151729 A1 | 14-05-2020 | EP 3651100 A1 | 13-05-2020 |
| | | US 2020151729 A1 | 14-05-2020 |
| | | WO 2020096701 A1 | 14-05-2020 |
| US 2011251951 A1 | 13-10-2011 | KEINE | |
| WO 2022008130 A1 | 13-01-2022 | AU 2021306447 A1 | 21-04-2022 |
| | | AU 2021306805 A1 | 21-04-2022 |
| | | BR 112023000150 A2 | 31-01-2023 |
| | | BR 112023000159 A2 | 31-01-2023 |
| | | CA 3184439 A1 | 13-01-2022 |
| | | CA 3184440 A1 | 13-01-2022 |
| | | CN 116194929 A | 30-05-2023 |
| | | CN 116235183 A | 06-06-2023 |
| | | CO 2023001273 A2 | 27-04-2023 |
| | | CO 2023001277 A2 | 19-05-2023 |
| | | EP 3956822 A1 | 23-02-2022 |
| | | EP 3991099 A1 | 04-05-2022 |
| | | GB 2597129 A | 19-01-2022 |
| | | GB 2597130 A | 19-01-2022 |
| | | IL 299717 A | 01-03-2023 |
| | | IL 299719 A | 01-03-2023 |
| | | JP 2023533069 A | 01-08-2023 |
| | | JP 2023533071 A | 01-08-2023 |
| | | PE 20230526 A1 | 27-03-2023 |
| | | PE 20230952 A1 | 13-06-2023 |
| | | US 2022012742 A1 | 13-01-2022 |
| | | US 2023118240 A1 | 20-04-2023 |
| | | WO 2022008130 A1 | 13-01-2022 |
| | | WO 2022008131 A1 | 13-01-2022 |

EPO FORM P0461

Für nähere Einzelheiten zu diesem Anhang : siehe Amtsblatt des Europäischen Patentamts, Nr.12/82